# EUROPEAN PATENT APPLICATION

(11) **EP 4 564 861 A1**
(43) Date of publication of application: **04.06.2025**
(21) Application number: 23845628.9
(22) Date of filing: 27.07.2023
(51) Int. Cl.: H04W 4/38, H04W 24/10, H04W 4/02, H04W 4/40

(54) **COMMUNICATION SENSING METHOD, AND APPARATUS**

(30) Priority: 28.07.2022 CN 202210897819
(71) Applicant: Huawei Technologies Co., Ltd., Shenzhen, Guangdong 518129 (CN)
(72) Inventor: ZHU, Fangyuan, Shenzhen, Guangdong 518129 (CN); XU, Shengfeng, Shenzhen, Guangdong 518129 (CN); YING, Jiangwei, Shenzhen, Guangdong 518129 (CN)
(74) Representative: Gill Jennings & Every LLP
(86) International application number: PCT/CN2023/109487
(87) International publication number: WO 2024/022421

(57) **Abstract**

Embodiments of this application provide a communication sensing method and apparatus. The method includes: A first terminal device sends a sensing measurement request message to a second terminal device, where the sensing measurement request message includes sense area information for performing sensing measurement by the second terminal device; and obtains sensing data or a sensing result, where the sensing data or the sensing result is determined based on sensing measurement performed by the second terminal device. According to the method disclosed in this application, sensing information of a sense area is obtained through cooperative sensing between terminals, thereby improving sensing efficiency and system sensing performance.

## Description

This application claims priority to Chinese Patent Application No. 202210897819.7, filed with the China National Intellectual Property Administration on July 28, 2022 and entitled "COMMUNICATION SENSING METHOD AND APPARATUS", which is incorporated herein by reference in its entirety.

### TECHNICAL FIELD

Embodiments of this application relate to the communication field, and more specifically, to a communication sensing method and apparatus.

### BACKGROUND

A wireless sensing technology (or referred to as a non-sensor scenario sensing technology) is obtaining a characteristic of a signal propagation space (channel) by analyzing a change of a radio signal in a propagation process, to implement scenario sensing.

With evolution of communication technologies, a sensing capability is derived based on a communication frequency band, especially a millimeter-wave frequency band. When a base station or a terminal has the sensing capability, a communication system may perform sensing and recognition for a specific area, a specific object, a specific event, or the like. An ultra-high sensing capability can be achieved by using advantages such as wide coverage, long coverage, large bandwidth, high precision, and low latency in a communication network. If this sensing capability is used as a new capability in the communication network, sensing demands in many scenarios can be met.

For example, in a traveling process, a vehicle having a sensing capability may use a sensing capability of the vehicle to sense a small-range environment around, for example, detect vehicular traffic around. A road environment is complex, or a target area in front may be blocked by a traveling vehicle in front. As a result, the terminal such as the above vehicle is limited to some extent in sensing surroundings.

### SUMMARY

Embodiments of this application provide a communication sensing method and apparatus, to obtain sense area information through cooperative sensing between terminals, thereby improving sensing efficiency and system sensing performance.

According to a first aspect, a communication sensing method is provided. The method may be performed by a first terminal device (for example, a user equipment (user equipment, UE 1)), or may be performed by a chip or a circuit used for the first terminal device. This is not limited in this application. For ease of description, an example in which the method is performed by the first terminal device is used below for description.

The method includes: The first terminal device sends a sensing measurement request message to a second terminal device. The sensing measurement request message is used to request the second terminal device to perform sensing measurement, and the sensing measurement request message includes sense area information for performing sensing measurement by the second terminal device. The first terminal device obtains sensing data or a sensing result. The sensing data or the sensing result is determined based on sensing measurement performed by the second terminal device.

For example, target sense area information includes a size of a target sense area and/or a target sensing direction, and the sense area information for performing sensing measurement by the second terminal device includes a sense area size and/or direction for performing sensing measurement by the second terminal device.

According to the solution provided in this application, the sense area information for performing sensing measurement by the second terminal device may be determined based on the target sense area information, and then the sensing data or the sensing result determined based on sensing measurement performed by the second terminal device can be obtained. Sensing information of a specific sense area, for example, a specific distance and/or a specific direction, is obtained through cooperative sensing between terminal devices, thereby improving sensing efficiency and system sensing performance.

With reference to the first aspect, in some implementations of the first aspect, the first terminal device obtains the target sense area information; and the first terminal device determines, based on the target sense area information, the sense area information for performing sensing measurement by the second terminal device.

It should be noted that the sense area size and/or direction for performing sensing measurement by the second terminal device may be the same as or different from the size of the target sense area and/or the target sensing direction. This is not specifically limited in this application. If they are different, the first terminal device may send a sensing measurement request message to a plurality of second terminal devices, to request the plurality of second terminal devices to separately perform sensing measurement, so that the first terminal device finally obtains sensing data or a sensing result corresponding to the size and/or direction of the target sense area.

With reference to the first aspect, in some implementations of the first aspect, that the first terminal device determines, based on the target sense area information, the sense area information for performing sensing measurement by the second terminal device includes: The first terminal device determines, based on a distance between the first terminal device and the second terminal device and the target sense area information, the sense area information for performing sensing measurement by the second terminal device.

Based on the foregoing solution, the sense area information for performing sensing measurement by the second terminal device is determined with reference to the distance between the first terminal device and the second terminal device and the target sense area information, and then the sensing data or the sensing result determined based on sensing measurement performed by the second terminal device can be obtained. The sense area size and/or direction are/is determined based on location information between terminal devices, so that more accurate sensing data or a more accurate sensing result can be obtained.

With reference to the first aspect, in some implementations of the first aspect, that the first terminal device obtains the target sense area information includes: The first terminal device receives a cooperative sensing request message from an application device. The cooperative sensing request message includes indication information of the target sense area information. The first terminal device determines the target sense area information based on the indication information of the target sense area information.

Based on the foregoing solution, the first terminal device may determine the target sense area and/or the target sensing direction based on the indication information of the target sense area information, and further determine the area size and/or direction for performing sensing measurement by the second terminal device. This helps subsequently request the second terminal device to perform targeted sensing measurement, thereby improving sensing efficiency and avoiding blind sensing measurement of the second terminal device.

With reference to the first aspect, in some implementations of the first aspect, before the first terminal device sends the sensing measurement request message to the second terminal device, the first terminal device sends a discovery request message. The discovery request message is used to request to discover the second terminal device, the discovery request message includes a discovery purpose, and the discovery purpose indicates the second terminal device to support cooperative sensing. Correspondingly, the first terminal device receives a discovery response message from the second terminal device.

Based on the foregoing solution, the first terminal device may determine, through a discovery procedure, one or more second terminal devices for subsequent sensing measurement. The second terminal device has a sensing capability and supports cooperative sensing. Sensing measurement for the target sense area and/or the target sensing direction can be implemented based on auxiliary sensing measurement of the second terminal device, thereby improving sensing efficiency and avoiding blind sensing measurement of the second terminal device.

With reference to the first aspect, in some implementations of the first aspect, the discovery request message further includes at least one or more items: location information of the first terminal device, or distance requirement information or direction requirement information between the first terminal device and the second terminal device.

Based on the foregoing solution, a terminal that receives the discovery request message may further determine, based on the foregoing parameter, whether the terminal meets a requirement of the first terminal device, so that a sensing measurement operation is better performed subsequently. This helps improve efficiency and avoids blind sensing measurement of the second terminal device.

With reference to the first aspect, in some implementations of the first aspect, the discovery response message includes location information of the second terminal device.

Based on the foregoing solution, the location information of the second terminal device is provided to the first terminal device, so that the first terminal device subsequently determines the distance between the first terminal device and the second terminal device based on the location information of the first terminal device and the second terminal device, and then requests the second terminal device to perform targeted sensing measurement for a specific sense area size and/or direction. This can help improve sensing efficiency and avoid blind sensing measurement of the second terminal device.

With reference to the first aspect, in some implementations of the first aspect, before the first terminal device sends the sensing measurement request message to the second terminal device, the first terminal device receives a first broadcast message from the second terminal device. The first broadcast message includes a sensing capability of the second terminal device and first indication information, and the first indication information indicates that the second terminal device supports cooperative sensing.

Based on the foregoing solution, terminal devices having a sensing capability may send first broadcast messages to another terminal around, for example, the first terminal device, to notify the first terminal device that the terminal devices have a sensing capability and support cooperative sensing with another UE, so that the first terminal device may determine, based on a distance relationship, a second terminal device from these terminal devices to perform a subsequent sensing operation.

With reference to the first aspect, in some implementations of the first aspect, the first broadcast message further includes location information of the second terminal device.

Based on the foregoing solution, the location information of the second terminal device is provided to the first terminal device, so that the first terminal device subsequently determines the distance between the first terminal device and the second terminal device based on the location information of the first terminal device and the second terminal device, and then requests the second terminal device to perform targeted sensing measurement for a specific sense area size and/or direction. This can help improve sensing efficiency and avoid blind sensing measurement of the second terminal device.

With reference to the first aspect, in some implementations of the first aspect, the first terminal device determines the distance between the first terminal device and the second terminal device based on the location information of the second terminal device.

Based on the foregoing solution, by determining the distance between the first terminal device and the second terminal device, the first terminal device may request the second terminal device to perform targeted sensing measurement for a specific sense area size and/or direction. This can help improve sensing efficiency, and avoid blind sensing measurement of the second terminal device.

According to a second aspect, a communication sensing method is provided. The method may be performed by a second terminal device (for example, a UE 2), or may be performed by a chip or a circuit used for the second terminal device. This is not limited in this application. For ease of description, an example in which the method is performed by the second terminal device is used below for description.

The method includes: The second terminal device receives a sensing measurement request message from a first terminal device. The sensing measurement request message is used to request the second terminal device to perform sensing measurement, and the sensing measurement request message includes sense area information for performing sensing measurement by the second terminal device. The second terminal device performs sensing measurement based on the sensing measurement request message.

According to the solution provided in this application, the second terminal device performs a sensing operation based on the sense area information that is carried in the sensing measurement request message and that is used for performing sensing measurement by the second terminal device, and then the first terminal device obtains sensing data or a sensing result. Sensing information of a target sense area can be obtained through cooperative sensing between a plurality of terminal devices, thereby improving sensing efficiency and system sensing performance.

With reference to the second aspect, in some implementations of the second aspect, the second terminal device sends sensing data or a sensing result to the first terminal device. The sensing data or the sensing result is determined based on the sensing measurement performed by the second terminal device.

Based on the foregoing solution, the second terminal device may obtain the sensing data or the sensing result in a sensing mode of monostatic sensing, and report the sensing data or the sensing result to the first terminal device. Alternatively, the second terminal device may send a sensing signal in a sensing mode of transmitter-initiated bistatic sensing, so that the first terminal device receives a reflected echo signal, and then processes the reflected echo signal to obtain the sensing data or the sensing result. Sensing information of a target sense area can be obtained through cooperative sensing between a plurality of terminal devices, thereby improving sensing efficiency and system sensing performance.

With reference to the second aspect, in some implementations of the second aspect, before the second terminal device receives the sensing measurement request message from the first terminal device, the second terminal device receives a discovery request message from the first terminal device. The discovery request message is used to request to discover the second terminal device, the discovery request message includes a discovery purpose, and the discovery purpose indicates the second terminal device to support a cooperative sensing operation. The second terminal device sends a discovery response message to the first terminal device.

Based on the foregoing solution, the first terminal device may determine, through a discovery procedure, one or more second terminal devices for subsequent sensing measurement. The second terminal device has a sensing capability and supports cooperative sensing. Sensing measurement for a target sense area and/or a target sensing direction can be implemented based on auxiliary sensing measurement of the second terminal device, thereby improving sensing efficiency.

With reference to the second aspect, in some implementations of the second aspect, the discovery request message further includes at least one or more items: location information of the first terminal device, or distance requirement information or direction requirement information between the first terminal device and the second terminal device.

Based on the foregoing solution, a terminal that receives the discovery request message may further determine, based on the foregoing parameter, whether the terminal meets a requirement of the first terminal device, so that a sensing measurement operation is better performed subsequently. This helps improve sensing efficiency.

With reference to the second aspect, in some implementations of the second aspect, the discovery response message includes location information of the second terminal device.

Based on the foregoing solution, the location information of the second terminal device is provided to the first terminal device, so that the first terminal device subsequently determines a distance between the first terminal device and the second terminal device based on the location information of the first terminal device and the second terminal device, and then requests the second terminal device to perform targeted sensing measurement for a specific sense area size and/or direction. This can help improve sensing efficiency and avoid blind sensing measurement of the second terminal device.

With reference to the second aspect, in some implementations of the second aspect, before the second terminal device receives the sensing measurement request message from the first terminal device, the second terminal device sends a first broadcast message to the first terminal device. The first broadcast message includes a sensing capability of the second terminal device and first indication information, and the first indication information indicates that the second terminal device supports cooperative sensing.

Based on the foregoing solution, terminal devices having a sensing capability may send first broadcast messages to another terminal around, for example, the first terminal device, to notify the first terminal device that the terminal devices have a sensing capability and support cooperative sensing with another UE, so that the first terminal device may determine, based on a distance relationship, a second terminal device from these terminal devices to perform a subsequent sensing operation.

With reference to the second aspect, in some implementations of the second aspect, the first broadcast message further includes location information of the second terminal device.

Based on the foregoing solution, the location information of the second terminal device is provided to the first terminal device, so that the first terminal device subsequently determines a distance between the first terminal device and the second terminal device based on the location information of the first terminal device and the second terminal device, and then requests the second terminal device to perform targeted sensing measurement for a specific sense area. This can help improve sensing efficiency and avoid blind sensing measurement of the second terminal device.

According to a third aspect, a communication sensing method is provided. The method may be performed by a first terminal device (for example, a UE 1), or may be performed by a chip or a circuit used for the first terminal device. This is not limited in this application. For ease of description, an example in which the method is performed by the first terminal device is used below for description.

The method includes: The first terminal device sends a request message to a second terminal device. The request message is used to request to obtain sensing data, and the request message includes sense area information corresponding to the to-be-obtained sensing data. The first terminal device receives the sensing data from the second terminal device.

According to the solution provided in this application, the first terminal device does not need to trigger the second terminal device to perform sensing measurement, but directly sends the request for obtaining the sensing data to the second terminal device, thereby reducing procedure complexity, and improving sensing efficiency and sensing performance.

For example, the second terminal device supports sensing measurement for a range of 50 meters in right front of the second terminal device.

With reference to the third aspect, in some implementations of the third aspect, the first terminal device obtains target sense area information; and the first terminal device determines, based on the target sense area information, the sense area information corresponding to the sensing data to be obtained from the second terminal device.

With reference to the third aspect, in some implementations of the third aspect, that the first terminal device determines, based on the target sense area information, the sense area information corresponding to the sensing data to be obtained from the second terminal device includes: The first terminal device determines, based on a distance between the first terminal device and the second terminal device and the target sense area information, the sense area information corresponding to the sensing data to be obtained from the second terminal device.

For example, the sense area information corresponding to the to-be-obtained sensing data includes a sense area size and/or direction.

With reference to the third aspect, in some implementations of the third aspect, that the first terminal device obtains target sense area information includes: The first terminal device receives a cooperative sensing request message from an application device. The cooperative sensing request message includes indication information of the target sense area information. The first terminal device determines the target sense area information based on the indication information of the target sense area information.

With reference to the third aspect, in some implementations of the third aspect, the first terminal device receives a second broadcast message from the second terminal device. The second broadcast message includes second indication information, and the second indication information indicates that the second terminal device supports exposure of local sensing data to outside.

With reference to the third aspect, in some implementations of the third aspect, the second broadcast message further includes location information of the second terminal device, and/or sense area information corresponding to the sensing data whose exposure to outside is supported.

Optionally, if the second broadcast message does not carry the location information of the second terminal device, the first terminal device may initiate a ranging ranging procedure, to obtain the distance between the second terminal device and the first terminal device, so that the first terminal device subsequently determines corresponding sense area information for requesting sensing data from the second terminal device. For a specific implementation of the ranging procedure, refer to a conventional technology. For brevity, details are not described herein.

With reference to the third aspect, in some implementations of the third aspect, the first terminal device determines the distance between the first terminal device and the second terminal device based on the location information of the second terminal device.

According to a fourth aspect, a communication sensing method is provided. The method may be performed by a second terminal device (for example, a UE 2), or may be performed by a chip or a circuit used for the second terminal device. This is not limited in this application. For ease of description, an example in which the method is performed by the second terminal device is used below for description.

The method includes: The second terminal device receives a request message from a first terminal device. The request message is used to request to obtain sensing data, and the request message includes sense area information corresponding to the to-be-obtained sensing data. The second terminal device sends the sensing data to the first terminal device.

It should be noted that target sense area information, for example, a target sense area and/or a target sensing direction, is obtained by the first terminal device. For example, when sensing data of the target sense area and/or the target sensing direction is inadequate or incorrect, the first terminal device receives a cooperative sensing request message from an application device. The cooperative sensing request message includes the target sense area information, or information indicating the target sense area information, for example, an absolute coordinate value.

According to the solution provided in this application, the first terminal device does not need to trigger the second terminal device to perform sensing measurement, but directly sends the request for obtaining the sensing data to the second terminal device, thereby reducing procedure complexity, and improving sensing efficiency and sensing performance.

With reference to the fourth aspect, in some implementations of the fourth aspect, the second terminal device performs sensing measurement, and obtains the sensing data and the sense area information corresponding to the sensing data. The second terminal device sends a second broadcast message to the first terminal device. The second broadcast message includes second indication information and the sense area information corresponding to the sensing data, and the second indication information indicates that the second terminal device supports sending of the sensing data to the first terminal device.

With reference to the fourth aspect, in some implementations of the fourth aspect, the second broadcast message further includes location information of the second terminal device, and/or sense area information corresponding to sensing data whose exposure to outside is supported.

According to a fifth aspect, a communication sensing apparatus is provided, including: a transceiver unit, configured to send a sensing measurement request message to a second terminal device, where the sensing measurement request message is used to request the second terminal device to perform sensing measurement, and the sensing measurement request message includes sense area information for performing sensing measurement by the second terminal device; and an obtaining unit, further configured to obtain sensing data or a sensing result, where the sensing data or the sensing result is determined based on sensing measurement performed by the second terminal device.

The transceiver unit may perform receiving and sending processing in the first aspect or the third aspect, and the processing unit may perform processing other than the receiving and sending processing in the first aspect or the third aspect.

According to a sixth aspect, a communication sensing apparatus is provided, including: a transceiver unit, configured to receive a sensing measurement request message from a first terminal device, where the sensing measurement request message is used to request a second terminal device to perform sensing measurement, and the sensing measurement request message includes sense area information for performing sensing measurement by the second terminal device; and a processing unit, configured to perform sensing measurement based on the sensing measurement request message.

The transceiver unit may perform receiving and sending processing in the second aspect or the fourth aspect, and the processing unit may perform processing other than the receiving and sending processing in the second aspect or the fourth aspect.

According to a seventh aspect, a communication sensing apparatus is provided, including a processor and a memory. Optionally, the apparatus may further include a transceiver. The memory is configured to store a computer program, and the processor is configured to invoke and run the computer program stored in the memory, and control the transceiver to receive and send signals, to enable the communication sensing apparatus to perform the method according to any one of the first aspect to the fourth aspect or the method according to any one of the possible implementations of the first aspect to the fourth aspect.

According to an eighth aspect, a communication apparatus is provided, including a processor and a communication interface. The communication interface is configured to receive data and/or information, and transmit the received data and/or information to the processor, the processor processes the data and/or information, and the communication interface is further configured to output data and/or information obtained through processing by the processor, so that the method according to any one of the first aspect to the fourth aspect or the method according to any one of the possible implementations of the first aspect to the fourth aspect is performed.

According to a ninth aspect, a computer-readable storage medium is provided. The computer-readable storage medium stores computer instructions. When the computer instructions are run on a computer, the method according to any one of the first aspect to the fourth aspect or the method according to any one of the possible implementations of the first aspect to the fourth aspect is performed.

According to a tenth aspect, a computer program product is provided. The computer program product includes computer program code. When the computer program code is run on a computer, the method according to any one of the first aspect to the fourth aspect or the method according to any one of the possible implementations of the first aspect to the fourth aspect is performed.

According to an eleventh aspect, a wireless communication system is provided, including one or more of the first terminal device and the second terminal device in the method according to any one of the first aspect to the fourth aspect.

### BRIEF DESCRIPTION OF DRAWINGS

FIG. 1 is a diagram of a network architecture applicable to this application;
FIG. 2 is a diagram of a network architecture that is used for sensing communication and that is applicable to this application;
FIG. 3 is a diagram of a sensing scenario according to an embodiment of this application;
FIG. 4 is an example flowchart of a first communication sensing method according to an embodiment of this application;
FIG. 5 is an example flowchart of a second communication sensing method according to an embodiment of this application;
FIG. 6 is an example flowchart of a third communication sensing method according to an embodiment of this application;
FIG. 7 is an example flowchart of a fourth communication sensing method according to an embodiment of this application;
FIG. 8 is an example flowchart of a fifth communication sensing method according to an embodiment of this application;
FIG. 9 is an example flowchart of a sixth communication sensing method according to an embodiment of this application;
FIG. 10 is a diagram of a structure of a communication sensing apparatus according to an embodiment of this application; and
FIG. 11 is a diagram of a structure of another communication sensing apparatus according to an embodiment of this application.

### DESCRIPTION OF EMBODIMENTS

The following describes technical solutions of this application with reference to accompanying drawings.

The technical solution provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. In addition, the technical solution provided in this application may be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, and other communication systems.

In a communication system, a part operated by an operator may be referred to as a public land mobile network (public land mobile network, PLMN), or may be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for users. The PLMN described in embodiments of this application may be specifically a network compliant with a specification of the 3rd generation partnership project (3rd generation partnership project, 3GPP), referred to as a 3GPP network for short. The 3GPP network usually includes but is not limited to a 5th-generation (5th-generation, 5G) mobile communication network, a 4th-generation (4th-generation, 4G) mobile communication network, and another communication system in the future, for example, a 6th-generation (6th-generation, 6G) network.

With upgrading of mobile communication technologies, the 5G network is constructed flexibly and efficiently. In the 5G network, a communication sensing capability may be used as a new capability. For ease of description, a system architecture of the 5G network is used as an example for description.

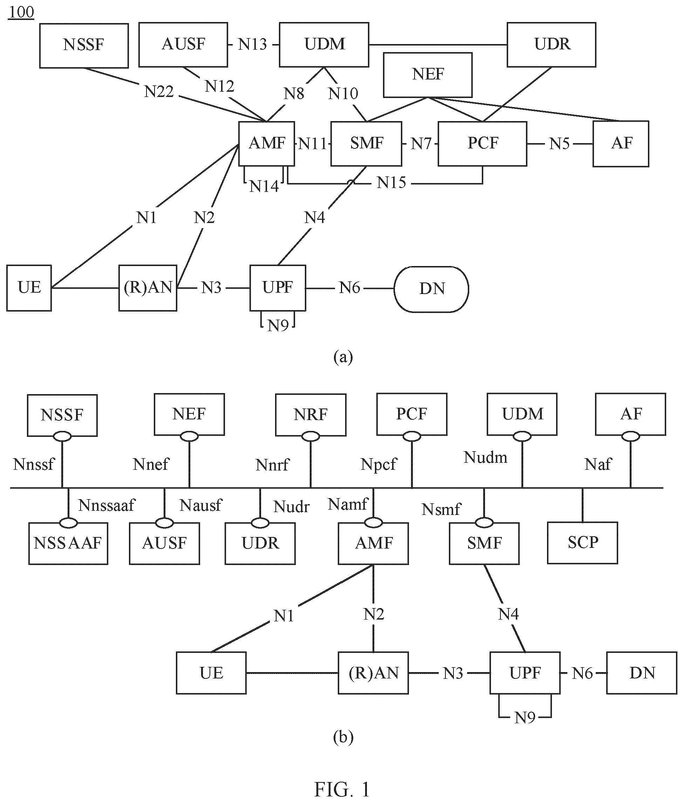

FIG. 1 is a diagram of a network architecture 100 applicable to this application. (a) in FIG. 1 is a diagram of a 5G network architecture based on point-to-point interfaces. The network architecture may include but is not limited to the following network elements (or referred to as function network elements, function entities, nodes, devices, or the like): a user equipment (user equipment, UE), a (radio) access network device (radio access network, (R)AN), a user plane function (user plane function, UPF) network element, a data network (data network, DN), an access and mobility management function (access and mobility management function, AMF) network element, a session management function (session management function, SMF) network element, a policy control function (policy control function, PCF) network element, an application function (application function, AF) network element, a network slice selection function (network slice selection function, NSSF), an authentication server function (authentication server function, AUSF), a unified data management (unified data management, UDM) network element, a network exposure function (network exposure function, NEF) network element, a unified data repository (unified data repository, UDR) network element, and the like.

The following briefly describes the network elements shown in (a) in FIG. 1.
1. UE: It is a terminal that communicates with the (R)AN, and may also be referred to as a terminal device, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. In this application, the terminal device may have a sensing capability. For example, a radio frequency module of the terminal device may send a radio frequency signal, and then an environment is perceived by receiving and processing a reflected signal. Therefore, in this application, the terminal device may detect and/or collect sensing data.
2. (R)AN network element: The RAN network element is configured to provide a network access function for authorized terminal devices in a specific area, and can use transmission tunnels of different quality based on levels of the terminal devices, service demands, or the like. The RAN can manage radio resources, provide an access service for the terminal device, and then forward a control signal and terminal device data between the terminal and a CN. The RAN may also be understood as a base station in a conventional network. In this application, when the base station performs wireless communication in a millimeter-wave frequency band, the base station naturally has a sensing capability like radar, that is, the base station has both a wireless communication capability and a sensing capability. Therefore, the RAN may detect and/or collect sensing data. The RAN in this application may also be referred to as a communication-radar integrated base station, which not only can implement communication service coverage for ground users, but also can detect flight targets such as uncrewed aerial vehicles, helicopters, or birds, and detect ground vehicle traffic, pedestrians, or the like.
3. UPF: It includes user plane functions such as data packet routing and transmission, data packet detection, service usage reporting, quality of service (quality of service, QoS) processing, lawful interception, uplink data packet detection, and downlink data packet storage.
4. DN: It is a network for data transmission. After accessing the network, the terminal device may establish a protocol data unit (protocol data unit, PDU) session and access the DN by using the PDU session, and may interact with the application function network element deployed in the DN. Based on different DNs accessed by users, the network may select a UPF that accesses a DN as a PDU session anchor (PDU Session Anchor, PSA) according to a network policy, and access an application function network element through an N6 interface of the PSA.
5. AMF: It is mainly used for mobility management, access management, and the like, and may be configured to implement functions, for example, lawful interception and access authorization/authentication, other than session management in functions of a mobility management network element (mobility management entity, MME).
6. SMF: It is mainly used for session management, internet protocol (internet protocol, IP) address assignment and management of terminal devices, selection of a termination point that can manage a terminal device plane function and policy control and charging function interface, downlink data notification, and the like.
7. PCF: It is a unified policy framework for guiding network behavior, and provides policy or rule information for a control plane function network element (for example, the AMF or SMF network element) and the like.
8. AF: The application function network element may interact with a 5G system, and is configured to access the network exposure function network element, interact with the policy framework for policy control, or the like.
9. NSSF: It mainly includes the following functions: selecting a group of network slice instances for the UE, determining allowed network slice selection assistance information (network slice selection assistance information, NSSAI), determining an AMF set that can serve the UE, and the like.
10. AUSF: It is configured to perform service authentication and generate a key to implement bidirectional authentication on the terminal device, and supports a unified authentication framework.
11. UDM/UDR: It is configured to process a terminal device identifier, access authentication, registration, mobility management, and the like, and may be a user database. It may be used as a single logical repository for storing user data.
12. NEF: It is configured to provide a network exposure provisioning function. The 5G communication system may further expose a capability supported by a 5GC to an external application function network element by using the NEF network element, for example, provide a small-data transfer capability.

It may be understood that the foregoing network element or function may be a physical entity in a hardware device, or may be a software instance running on dedicated hardware, or may be a virtualized function instantiated on a shared platform (for example, a cloud platform). Simply speaking, an NF may be implemented by hardware, or may be implemented by software.

(b) in FIG. 1 is a diagram of a 5G network architecture based on service-based interfaces. The network architecture may include but is not limited to the following network elements (or referred to as function network elements, function entities, nodes, devices, or the like): a UE, a (R)AN, a UPF network element, a DN, an AMF network element, an SMF network element, a PCF network element, an AF network element, an NSSF network element, an AUSF network element, a UDM network element, an NEF network element, a UDR network element, and the like. For descriptions of functions of the network elements, refer to descriptions of corresponding network element functions in (a) in FIG. 1. Details are not described herein again.

Nnssf, Nnef, Nnrf, Npcf, Nudm, Nudr, Naf, Nausf, Namf, Nsmf, N1, N2, N3, N4, N6, and N9 in (a) and (b) in FIG. 1 are interface sequence numbers. For example, for meanings of the interface sequence numbers, refer to meanings defined in the 3GPP standard protocol. The meanings of the interface sequence numbers are not limited in this application. It should be noted that interface names between network functions in (a) and (b) in FIG. 1 are merely examples. In specific implementation, the interface names of the system architectures may alternatively be other names. This is not limited in this application. In addition, names of messages (or signaling) transmitted between the foregoing network elements are merely examples, and do not constitute any limitation on functions of the messages.

It should be understood that the foregoing network architectures are merely network architecture examples described from the perspective of a service-oriented architecture, a network architecture applicable to embodiments of this application is not limited thereto, and any network architecture that can implement functions of the foregoing network elements is applicable to embodiments of this application. A communication sensing method provided in embodiments of this application may further relate to a network element that is not shown in FIG. 1. Certainly, the communication sensing method provided in embodiments of this application may alternatively include only a part of the network elements shown in FIG. 1.

It should be further understood that the foregoing names are defined merely for ease of distinguishing between different functions, and should not constitute any limitation on this application. This application does not exclude a possibility that another name is used in the 5G network and another network in the future. For example, in a 6G network, a part or all of the foregoing network elements may reuse terms in 5G, or may use other names.

In this application, the network architecture 100 may further include a location management function (location management service, LMF) network element, configured to initiate a positioning procedure for the terminal device, to obtain location information of the terminal device.

In this application, the network architecture 100 may further include a sensing network element. The sensing network element is responsible for enabling a sensing service in an end-to-end manner. For example, the sensing network element obtains a sensing demand based on an internal demand of a network or a demand of a sensing service demander. After obtaining the sensing demand, the sensing network element triggers the access network device or the terminal device to detect and/or collect sensing data. In this application, the sensing network element may communicate with another network element, for example, a network element such as the RAN, the AMF, the SMF, or the LMF.

It should be noted that in the 5G network, the sensing network element may be one of network elements in a 5G core network (5G core, 5GC). Alternatively, the sensing network element non-core network element. Alternatively, the sensing network element may be independently deployed. Alternatively, the sensing network element may be a sub-network element or a module in a 5GC network element. For example, the sensing network element may be deployed together with the AMF, UPF, SMF, or LMF network element. This is not particularly limited in this application.

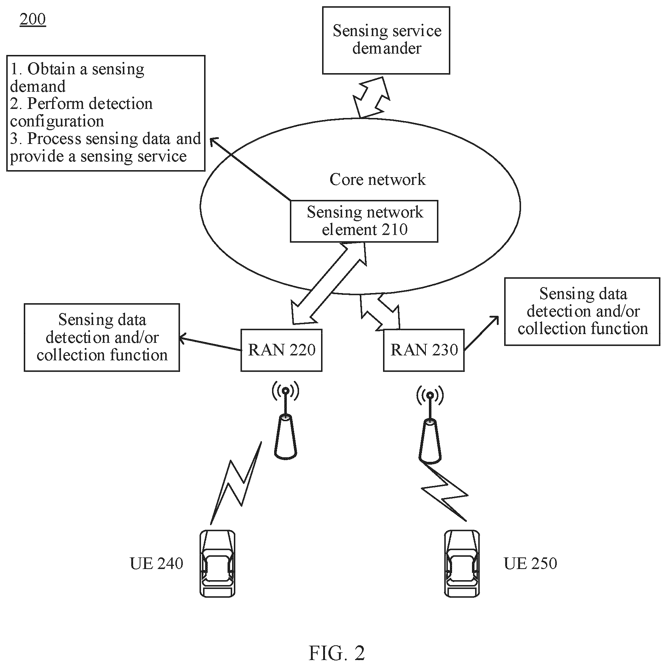

FIG. 2 is a diagram of a network architecture 200 that is used for sensing communication and that is applicable to this application. As shown in FIG. 2, the network architecture 200 includes a sensing network element (for example, a sensing function (sensing function, SF) network element), at least one RAN network element having a sensing capability, and at least one UE having a sensing capability, for example, a sensing network element 210, a RAN 220, a RAN 230, a UE 240, and a UE 250 that are shown in FIG. 2. The sensing network element 210 is responsible for enabling a sensing service in an end-to-end manner.

For example, the sensing network element 210 may obtain a sensing demand based on an internal demand of a network or a demand of a sensing service demander. After obtaining the sensing demand, the sensing network element 210 triggers the RAN 220 and/or the RAN 230 to detect and/or collect sensing data. For example, the RAN 220 sends a sensing signal to the UE 240 and receives an echo signal from the UE 240, and/or the RAN 230 sends a sensing signal to the UE 250 and receives an echo signal from the UE 250. The RAN 220 and the RAN 230 separately perform specific processing based on the received echo signals to generate sensing data. It should be understood that the echo signal is a signal obtained after the sensing signal is reflected by an object. Then, the RAN 220 and/or the RAN 230 separately provides the sensing data to the sensing network element 210, and the sensing network element 210 provides, based on the sensing data, the sensing service for the demander, for example, an AF, an external application server (application server, AS), or a terminal device. Alternatively, the sensing network element 210 may perform optimization or the like on interior of the network based on the sensing data.

It should be understood that FIG. 1 and FIG. 2 are merely examples of communication network architectures, which are not specifically limited in this application. Any network architecture that can implement functions of the foregoing network elements is applicable to embodiments of this application.

In a wireless communication process, electromagnetic waves carry environment information when transferring signals in space. For example, if a Wi-Fi signal received by a mobile phone is weak, a possible cause is that the mobile phone is far away from a wireless router. If strength of a Wi-Fi signal received by a mobile phone decreases sharply, a possible cause is that the mobile phone enters a specific closed space, such as an elevator. The received signal strength (received signal strength indicator, RSSI) may be used as a feature to deduce a location of the mobile phone and an environment in which the mobile phone is located. Selection of the signal feature significantly affects sensing precision, reliability, a model generalization capability, and the like.

For example, radar sensing is a common wireless sensing technology. A location, a shape, a motion characteristic, and a motion trajectory of a target are extracted and discovered by analyzing a characteristic of a received target echo, and features of the target and an environment may be further deduced. The radar technology is advantaged in motion detection. A motion status, such as a moving direction and a moving speed, of the target is observed and interpreted by using a Doppler effect of the target echo. When a multi-channel sensor is used, motion of the target can be further observed from different angles. By collecting the motion status of the target from different angles and analyzing instantaneous information and historical information, complex motion can be distinguished.

With development of the 5G network, demands for a new network capability based on sensing are gradually emerging. For example, in some smart city and smart transportation scenarios, demands for obtaining relative locations and angles between objects and sensing information such as a distance, a speed, and a shape of a target object gradually emerge. To meet these service demands, the 5G network needs to be further enhanced to assist a wireless network in sensing. In the future, 5G may be deployed with a radar-communication integrated base station to enhance a sensing capability of a base station. A precise sensing capability of the radar may be used to implement precise communication and improve communication efficiency. For example, time division multiplexing or spatial division multiplexing is performed on a communication resource and a sensing resource of the base station, to sense an environment or object around. The sensing function may be used for detection in security scenarios in which cameras cannot be installed. For example, in a specific industrial park, intrusion of flying objects such as uncrewed aerial vehicles can be detected. In a traffic scenario, a roadside station can complete functions such as traffic statistics collection and vehicle navigation. All the functions require a roadside base station to have a sensing capability to some extent.

A 5G terminal may also have a sensing capability to sense an environment or object around. For example, the terminal sends a sensing measurement signal, and collects a sensing signal reflected by another object in an environment around. Such a measurement mode may be referred to as monostatic sensing (that is, the UE performs sending and the UE performs receiving). For another example, the terminal sends a sensing measurement signal, and another UE collects a sensing signal reflected by another object in an environment around. Such a measurement mode may be referred to as transmitter-initiated bistatic sensing (that is, the UE performs sending, and another UE performs receiving). For example, in a traveling process of a vehicle, the vehicle, as a UE, may sense a small-range environment around the vehicle in a manner of monostatic sensing, for example, detect vehicular traffic around. Because a road environment is complex, the UE is limited in sensing surroundings (for example, in the traveling process, an obstacle in a direction may appear around the vehicle), and the UE may obtain sensing information of the environment around by using another UE.

It may be understood that different sensing modes have different requirements on terminal capabilities. In different application scenarios, different sensing modes may be used to perform sensing measurement on an environment around.

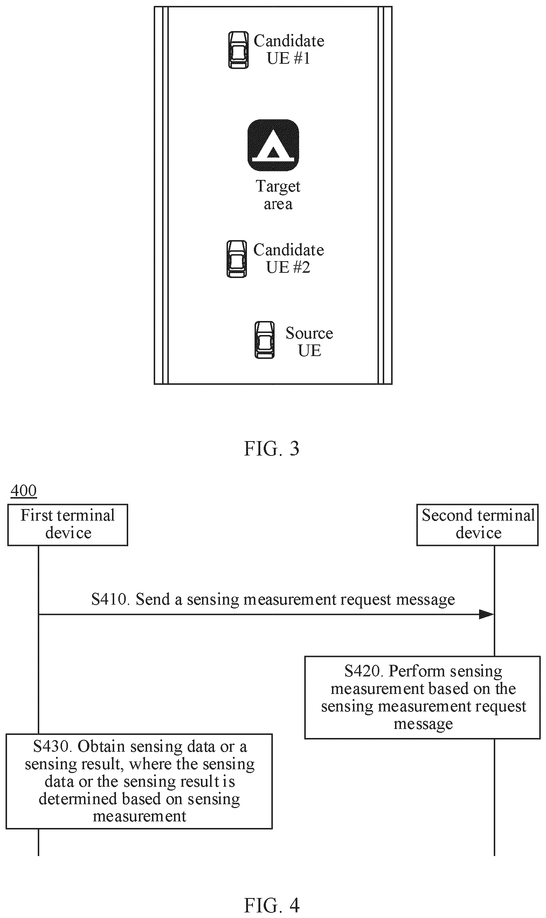

FIG. 3 is a diagram of a sensing scenario according to an embodiment of this application. As shown in FIG. 3, in a traveling process of a source UE (Source UE), a target area in front (for example, a road construction area) is blocked by a traveling vehicle (a candidate UE #2) in front. Therefore, the source UE cannot detect the target area by using a sensing capability of the source UE. The source UE may request another UE (referred to as a candidate UE) to assist the source UE in obtaining sensing information of the target area. However, a distance between the source UE and the candidate UE affects a direction in which the candidate UE performs sensing measurement. For example, the target area is located in rear of a candidate UE #1, and the candidate UE #1 needs to send sensing information in rear of the vehicle to the source UE. The target area is located in front of the candidate UE #2, and the candidate UE #2 needs to send sensing information in front of the vehicle to the source UE. The source UE determines a status of the target area based on the sensing information of the candidate UE #1 and the candidate UE #2.

In conclusion, this application provides a communication sensing method and apparatus. In a sensing scenario, when an environment is blocked, a source UE needs to discover a targeted candidate UE that is in a specific direction and/or a specific distance and that is related to a target sense area, and obtain, from the candidate UE, sensing data that meets a condition. Because distances between the source UE and different candidate UEs are different, directions in which the different candidate UEs are requested to perform sensing measurement need to be determined with reference to the distances between the source UE and the candidate UEs.

For ease of understanding embodiments of this application, the following points are described:
First, in this application, unless otherwise stated or there is a logic conflict, terms and/or descriptions between different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between the associated objects. The expression "at least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c, where a, b, and c may be singular or plural.

Third, in this application, "first", "second", and various numbers (for example, #1 and #2) are merely used for distinguishing for ease of description, rather than intended to limit the scope of embodiments of this application, for example, used for distinguishing between different messages, rather than describing a specific order or sequence. It should be understood that objects described in such a way are interchangeable in an appropriate circumstance, so that a solution other than embodiments of this application can be described.

Fourth, in this application, descriptions such as "when ...", "in a case of ...", and "if" all mean that a device performs corresponding processing in a specific objective situation, are not intended to limit time, do not require the device to perform a determining action during implementation, and do not mean that there is another limitation.

Fifth, in this application, the terms "include", "have" and any other variants thereof are intended to cover non-exclusive inclusion. For example, a process, method, system, product, or device that includes a series of steps or units is not limited to those clearly listed steps or units, but may include other steps or units that are not explicitly listed or are inherent to such a process, method, system, product, or device.

Sixth, in this application, the term "indicate" may include directly indicate and indirectly indicate. When a piece of indication information is described as indicating A, the indication information may directly indicate A or indirectly indicate A, and it does not represent that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or different. A specific sending method is not limited in this application.

The "indicated information" in embodiments of this application may be explicitly indicated, that is, directly indicated by using signaling, or obtained based on a parameter indicated by signaling and with reference to another rule or another parameter or through derivation, or may be implicitly indicated, that is, obtained according to a rule or a relationship, or based on another parameter, or through derivation. This is not specifically limited in this application.

Seventh, in this application, a "protocol" may be a standard protocol in the communication field, for example, may include a 5G protocol, a new radio (new radio, NR) protocol, or a related protocol applied to a future communication system. This is not limited in this application. The term "preconfigure" may include predefine, for example, define in a protocol. The "predefine" may be implemented by storing, in advance in a device, corresponding code, a corresponding table, or the like that may indicate related information. A specific implementation is not limited in this application.

Eighth, in this application, "store" may mean storage in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in this application.

Ninth, in this application, "communication" may also be described as "data transmission", "information transmission", "data processing", or the like. The "transmission" includes "sending" and "receiving". This is not limited in this application.

Ninth, sensing data is also referred to as sensing service data, sensing service data, sensing application data, or the like. That a message A includes information a may be described as that the message A has information a or the message A carries information a instead. That a network element A determines or selects C according to a message B may be described as that the network element A determines or selects C based on the message B instead. This is not repeated below.

The technical solutions provided in this application are described in detail below with reference to accompanying drawings.

FIG. 4 is a schematic flowchart of a first communication sensing method 400 according to an embodiment of this application. As shown in FIG. 4, the method includes the following steps.

S410. A first terminal device sends a sensing measurement request message to a second terminal device.

Correspondingly, the second terminal device receives the sensing measurement request message from the first terminal device.

The sensing measurement request message is used to request the second terminal device to perform sensing measurement, and the sensing measurement request message includes sense area information for performing sensing measurement by the second terminal device. The sense area information for performing sensing measurement by the second terminal device may include a size of a sense area and/or a sensing direction.

In a possible implementation, the first terminal device obtains target sense area information, and determines, based on the target sense area information, the sense area information for performing sensing measurement by the second terminal device.

For example, the target sense area information may include a size of a target sense area and/or a target sensing direction. The size of the target sense area indicates a size of an environment range that needs to be sensed, and the target sensing direction indicates a direction in which an environment needs to be sensed.

In a possible implementation, that the first terminal device obtains target sense area information includes: The first terminal device receives a cooperative sensing request message from an application device. The cooperative sensing request message includes indication information of the target sense area information. The first terminal device determines the target sense area information based on the indication information of the target sense area information.

For example, when the first terminal device is blocked by an object around, and therefore is limited in sensing measurement, the application device may send the cooperative sensing request message to the first terminal device, to request the first terminal device to obtain environment information.

Optionally, the cooperative sensing request message further includes one or more of the following: delay information and a reporting periodicity of sensing data. The delay information may indicate a latest moment at which the first terminal device responds to the cooperative sensing request of the first terminal device. The reporting periodicity of sensing data indicates a periodicity for obtaining sensing data by the first terminal device.

It should be noted that the target sense area information may be explicitly indicated. For example, the indication information, received by the first terminal device from an application layer, of the target sense area information is the size of the target sense area and/or the target sensing direction. Alternatively, the target sense area information may be implicitly indicated. For example, the indication information of the target sense area information carries information indicating the size of the target sense area and/or the target sensing direction, for example, a reference coordinate or an absolute coordinate of a geographical location. The first terminal device may further determine the size of the target sense area and/or the target sensing direction based on the reference coordinate or the absolute coordinate of the geographical location. This is not specifically limited in this application.

For example, the application layer may determine the target sense area and the target sensing direction by using the first terminal device as a reference coordinate. For example, when the first terminal device is used as a reference coordinate, an area range that is in a left direction of the first terminal device and whose size is 5 meters multiplied by 5 meters is used as the target sensing direction and the target sense area.

For example, the application layer may alternatively determine the target sense area and the target sensing direction by using an absolute coordinate of a geographical location. For example, the target sense area and the target sensing direction are further indicated by using a geographic coordinate system (geographic coordinate system) (for example, longitude and latitude information) or an absolute coordinate value.

A method for determining, by the first terminal device based on the target sense area information, the sense area information for performing sensing measurement by the second terminal device may be as follows:
In a possible implementation, after obtaining the target sense area information, the first terminal device does not need to locally process the target sense area information, but directly sends, to the second terminal device, the target sense area information as the sense area information for requesting the second terminal device to perform sensing measurement.

In another possible implementation, the first terminal device obtains the target sense area information, and the first terminal device determines, based on a distance between the first terminal device and the second terminal device and the target sense area information, the sense area information for performing sensing measurement by the second terminal device. The first terminal device may determine the distance between the first terminal device and the second terminal device based on location information of the second terminal device and location information of the first terminal device. It should be understood that the distance between the first terminal device and the second terminal device in this application is a straight-line distance between the first terminal device and the second terminal device, for example, 100 meters.

For example, if the target sense area information indicates that an environment that needs to be sensed is a range of 5 meters multiplied by 5 meters in right front of the first terminal device, the distance between the second terminal device and the first terminal device is 10 meters, and the second terminal device is located in right front of the first terminal device, an area size and/or direction determined by the first terminal device for requesting the second terminal device to perform sensing measurement may be an area of 10 meters multiplied by 10 meters in right rear of the second terminal device.

For example, if the target sense area and the target sensing direction indicate that an environment that needs to be sensed is a range of 10 meters multiplied by 10 meters on a right side of the first terminal device, and two second terminal devices (a UE 2 and a UE 2') are respectively located in right-side front and right-side rear of the first terminal device, and located in right front and right rear of the target sense area, the first terminal device determines that an area size and/or direction for performing sensing measurement by the UE 2 may be an area range of 5 meters multiplied by 5 meters in right rear of the UE 2, and determines that an area size and/or direction for performing sensing measurement by the UE 2' may be an area range of 5 meters multiplied by 5 meters in right front of the UE 2', to ensure that the area ranges for which the two second terminal devices perform sensing measurement completely cover the target sense area.

It should be noted that there may be one or more second terminal devices. This is not specifically limited in this application. For example, there are two second terminal devices. During sensing measurement, the first terminal device may determine, for each second terminal device, sense area information for performing targeted sensing measurement. The sense area information determined for performing sensing measurement by each second terminal device may be the same or different.

Optionally, the sensing measurement request message may further include a sensing mode, for example, a terminal based sensing mode (UE based sensing mode), where the second terminal device sends a sensing signal and receives a reflected echo signal (this mode may also be referred to as monostatic sensing of the UE); or a multi-terminal cooperative sensing mode, where the second terminal device sends a sensing signal, and the first terminal device receives a reflected echo signal (this mode may also be referred to as transmitter-initiated bistatic sensing between UEs). Alternatively, a cooperative sensing operation is performed between a plurality of second terminal devices, and sensing data is reported to the first terminal device.

For example, when the second terminal device supports only one sensing mode, the sensing measurement request message may not carry the sensing mode. Alternatively, when the sensing mode is preconfigured, the sensing measurement request message may not carry the sensing mode. This is not specifically limited in this application.

It should be noted that the foregoing sensing modes are merely described as examples for ease of understanding of the solution, and should not constitute any limitation on the technical solution of this application.

In a possible implementation, before the first terminal device sends the sensing measurement request message to the second terminal device, the first terminal device sends a discovery request message. The discovery request message is used to request to discover the second terminal device, the discovery request message includes a discovery purpose, and the discovery purpose indicates the second terminal device to support cooperative sensing. Correspondingly, the first terminal device receives a discovery response message from the second terminal device.

Optionally, the first terminal device may send the discovery request message in the target sensing direction. The discovery request message may carry the discovery purpose and information about a requirement for a sensing capability of the second terminal device. For example, a second terminal device that the discovery request message requests to discover has a sensing capability of sensing an environment around within 100 meters, and supports a cooperative sensing operation with another terminal device.

Optionally, the first terminal device may send the discovery request message in all directions. In other words, the first terminal device broadcasts the discovery request message. The discovery request message may carry the discovery purpose and information about a requirement for a sensing capability of the second terminal device. Correspondingly, all terminals that receive the discovery request message may determine whether a condition is met, that is, determine whether the terminals have a capability of sensing an environment around within 100 meters, or whether the terminals support a capability of cooperative sensing with another terminal. If the condition is met, a discovery response message is sent to the first terminal device. If the condition is not met, the response may not be sent. That is, a terminal that sends the discovery response message is the second terminal device.

Optionally, the discovery request message further includes at least one or more items: the location information of the first terminal device, or distance requirement information or direction requirement information between the first terminal device and the second terminal device.

For example, the location information of the first terminal device may be represented by using an absolute coordinate of a geographical location, a geographical coordinate system (for example, longitude and latitude information), or an absolute coordinate value. This is not specifically limited in this application.

For example, the distance requirement information between the first terminal device and the second terminal device indicates that the distance between the first terminal device and the second terminal device needs to be less than 100 meters; or the direction requirement information between the first terminal device and the second terminal device indicates that the second terminal device needs to be located in the left direction of the first terminal device. For example, all the terminals that receive the discovery request message may determine, based on their locations and a location of the first terminal device, whether distances or directions between the first terminal device and the terminals meet the distance requirement information or the direction requirement information between the first terminal device and the second terminal device that is carried in the discovery request message. If the distance requirement information or the direction requirement information is met, a response is sent to the first terminal device.

Optionally, the discovery response message includes the location information of the second terminal device.

For example, the location information of the second terminal device may be represented by using an absolute coordinate of a geographical location, a geographical coordinate system (for example, longitude and latitude information), or an absolute coordinate value. This is not specifically limited in this application.

Optionally, if the discovery response message does not carry the location information of the second terminal device, the first terminal device may initiate a ranging ranging procedure, to obtain the distance between the second terminal device and the first terminal device, so that the first terminal device subsequently determines, for the second terminal device, the sense area information for performing targeted sensing measurement. For a specific implementation of the ranging procedure, refer to a conventional technology. For brevity, details are not described herein.

In a possible implementation, before the first terminal device sends the sensing measurement request message to the second terminal device, the first terminal device receives a first broadcast message from the second terminal device. The first broadcast message includes a sensing capability of the second terminal device and first indication information, and the first indication information indicates that the second terminal device supports cooperative sensing.

For example, a UE 1 and a UE 2 each send a first broadcast message to the first terminal device, to indicate that both the UE 1 and the UE 2 have a sensing capability and support cooperative sensing with another UE. The sensing capability of the UE 1 is an area range with a radius of 100 meters using a location of the UE 1 as a center of a circle, the UE 1 is located in right front of the first terminal device, and a distance between the UE 1 and the first terminal device is 100 meters. The sensing capability of the UE 2 is an area range with a radius of 100 meters using a location of the UE 2 as a center of a circle, the UE 2 is located in right rear of the first terminal device, and a distance between the UE 2 and the first terminal device is 50 meters. For example, if the target sense area and the target sensing direction indicate a 50-meter area range with a radius of 50 meters in right rear of the first terminal device, the first terminal device may further determine that the UE 2 meets a condition, and send a sensing measurement request message to the UE 2, to request a sensing operation. For example, if the target sense area and the target sensing direction indicate an area range with a radius of 150 meters using the first terminal device as a center, the first terminal device may further determine that both the UE 1 and the UE 2 meet a condition, and send a sensing measurement request message to the UE 1 and the UE 2 to request the UE 1 and the UE 2 to perform a sensing operation, so as to obtain all sensing data in the target sense area and/or the target sensing direction.

Optionally, the first broadcast message further includes the location information of the second terminal device.

For example, the location information of the second terminal device may be represented by using an absolute coordinate of a geographical location, a geographical coordinate system (for example, longitude and latitude information), or an absolute coordinate value. This is not specifically limited in this application.

Optionally, if the first broadcast message does not carry the location information of the second terminal device, the first terminal device may initiate a ranging ranging procedure, to obtain the distance between the second terminal device and the first terminal device, so that the first terminal device subsequently determines, for the second terminal device, the sense area information for performing targeted sensing measurement.

S420. The second terminal device performs sensing measurement based on the sensing measurement request message.

In a possible implementation, the sensing measurement request message carries the sense area information for performing sensing measurement by the second terminal device. For example, the sense area information may be represented by an area size and/or direction: an area of 10 meters multiplied by 10 meters in right rear of the second terminal device. When the second terminal device supports only the terminal based sensing mode (UE based sensing mode), the second terminal device sends a sensing signal to the area of 10 meters multiplied by 10 meters in right rear of the second terminal device and receives a reflected echo signal, and may generate sensing data after processing the reflected echo signal. Optionally, the second terminal device may generate a sensing result based on the sensing data.

For a specific implementation of sensing measurement, refer to a conventional technology. For brevity, details are not described herein.

S430. The first terminal device obtains sensing data or a sensing result, where the sensing data or the sensing result is determined based on sensing measurement performed by the second terminal device.

In a possible implementation, when a sensing mode in which the second terminal device performs the sensing operation is the terminal based sensing mode, the first terminal device receives sensing data or a sensing result from the second terminal device.

In another possible implementation, when the sensing mode in which the second terminal device performs the sensing operation is the multi-terminal cooperative sensing mode, the second terminal device sends a sensing signal, and the first terminal device receives a reflected echo signal, and processes the reflected echo signal to generate sensing data or a sensing result. Alternatively, a cooperative sensing operation is performed between a plurality of second terminal devices, and sensing data or a sensing result is reported to the first terminal device.

Optionally, the first terminal device sends a cooperative sensing response message to the application layer. Correspondingly, the application layer receives the cooperative sensing response message from the first terminal device. The cooperative sensing response message includes the sensing data or the sensing result associated with the target sense area and/or the target sensing direction. Further, the application layer locally fuses all sensing data based on the received sensing data or sensing result.

According to the solution provided in this application, the sense area information for performing sensing measurement by the second terminal device is determined with reference to the distance between the first terminal device and the second terminal device and the target sense area and/or the target sensing direction, and then the sensing data or the sensing result is obtained. Sensing information of a specific distance and/or a specific direction is obtained through cooperative sensing between terminal devices, thereby improving sensing efficiency and system sensing performance.

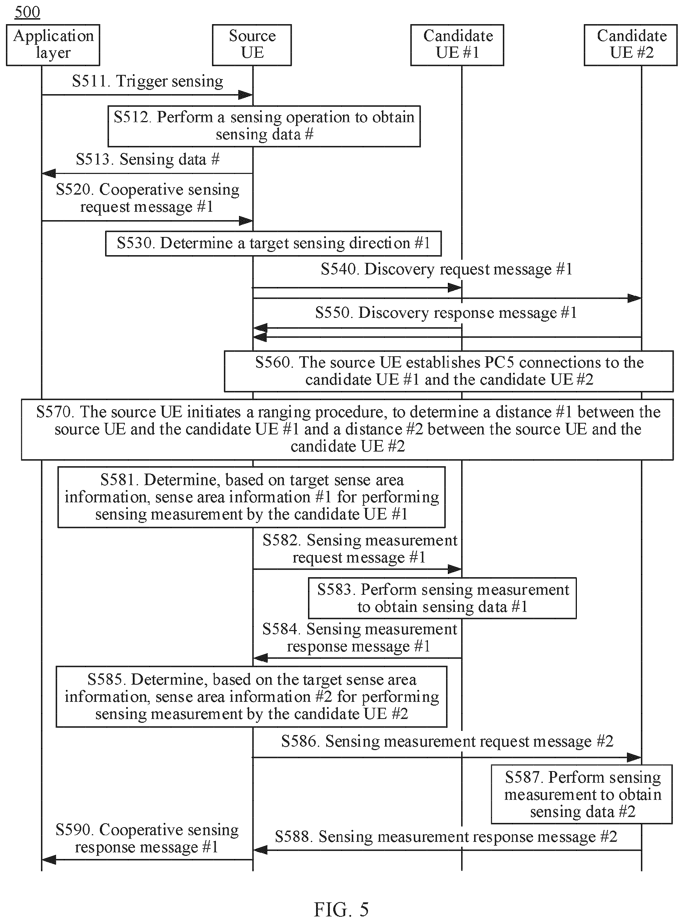

FIG. 5 is an example flowchart of a second communication sensing method 500 according to an embodiment of this application. In this implementation, a source UE (source UE) triggers a candidate UE (for example, a candidate UE #1 and a candidate UE #2) to perform sensing measurement for a specific sense area size and/or direction, and obtains sensing measurement data or a sensing result from the candidate UE. As shown in FIG. 5, the method includes the following steps.

S511. An application layer triggers a source UE to perform sensing.

It should be understood that a trigger condition, a trigger event, a trigger occasion, or the like is not specifically limited in this application.

For example, when receiving a sensing service request from a demander, an application device (for example, an AF) may send a request message #1 to the source UE. The request message #1 is used to request the source UE to perform a sensing operation on an environment or object around, to obtain sensing data #.

S512. The source UE performs a sensing operation to obtain sensing data #.

For example, the source UE may perform, based on the request message #1 of the AF, sensing measurement on the environment or object around in a sensing mode of monostatic sensing. To be specific, the source UE sends a sensing signal to the environment or object around, and collects a sensing signal reflected by the environment or object around, that is, receives a reflected echo signal.

It should be understood that the sensing mode (for example, monostatic sensing) in which the source UE performs sensing measurement is merely an example for ease of understanding of the solution. This is not specifically limited in this application. For example, the source UE may alternatively perform the sensing operation in another sensing mode, where the source UE sends a sensing signal and another UE receives a reflected echo signal, or another UE sends a sensing signal and the source UE receives an echo signal.

S513. The source UE sends the sensing data # to the application layer.

Correspondingly, the application layer receives the sensing data # from the source UE.

S520. The application layer sends a cooperative sensing request message #1 to the source UE.

Correspondingly, the source UE receives the cooperative sensing request message #1 from the application layer.

The cooperative sensing request message #1 includes indication information of target sense area information. For example, the target sense area information includes a size of a target sense area #1 and/or a target sensing direction #1.

In a possible implementation, the application layer may indicate the target sense area information by using the source UE as a reference coordinate. For example, when the source UE is used as a reference coordinate, an area range that is in a left direction of the source UE and whose size is 5 meters multiplied by 5 meters is used as the target sense area information. That is, the target sensing direction #1 is left of the UE, and the size of the target sense area #1 is an area range of 5 meters multiplied by 5 meters.

In another possible implementation, the application layer may alternatively indicate the target sense area information by using an absolute coordinate of a geographical location. For example, the target sense area information is further indicated by using a geographic coordinate system (for example, longitude and latitude information) or an absolute coordinate value.

It should be understood that the foregoing manners of indicating the target sense area information are merely examples for description, and a manner of indicating the target sense area information is not specifically limited in this application.

Optionally, the cooperative sensing request message #1 further includes one or more of the following: delay information and a reporting periodicity of sensing data (that is, sensing data #1 and sensing data #2 below). The delay information may indicate a latest moment at which the source UE responds to the cooperative sensing request in step S520, that is, a latest reporting moment of a cooperative sensing response message #1 in step S590. The reporting periodicity of sensing data indicates a periodicity in which the source UE returns the sensing response message #1.

For example, because the source UE is blocked by an object around, the sensing data # obtained in step S512 is inadequate, incorrect, or inaccurate in some directions, or precision of a sensing result # obtained through analysis does not meet a requirement of the application layer. In this case, the application layer may send the cooperative sensing request message #1 to the source UE.

S530. Optionally, the source UE determines the target sensing direction #1.

For example, the source UE determines the target sensing direction #1 based on the indication information of the target sense area information in the cooperative sensing request message #1 of the application layer, and then determines a direction of the source UE in which another UE needs to be discovered. For example, when the target sensing direction #1 indicated in the target sense area information indicates that environment information on the left of the source UE needs to be sensed, the source UE needs to discover another UE located on the left of the source UE, to assist the source UE in obtaining corresponding sensing information. It may be understood that, efficiency of discovering another UE can be improved by determining the target sensing direction #1 by the source UE.

If step S530 is not performed, that is, the source UE does not need to determine the target sensing direction #1, the source UE may discover another UE in all directions around.

S540. The source UE sends a discovery request message #1 to the another UE (for example, a candidate UE #1 and a candidate UE #2).

Correspondingly, the another UE (for example, the candidate UE #1 and the candidate UE #2) receives the discovery request message #1 from the source UE.

The discovery request message #1 includes a discovery purpose and information about a requirement for a sensing capability of a candidate UE. Specifically, the discovery purpose indicates that current UE discovery is performed for cooperative sensing. That is, the discovery request message #1 is used to request to discover a candidate UE that has a sensing capability and that can perform cooperative sensing. There may be one or more candidate UEs meeting a requirement. If there are a plurality of candidate UEs meeting the requirement, the source UE may determine, from the candidate UEs, one or more candidate UEs as candidate UEs for cooperative sensing. A quantity of candidate UEs is not specifically limited in this application.

For example, the discovery request message #1 may be a Discovery Request message.

Optionally, the discovery request message #1 may further include one or more of the following: a location of the source UE, and distance requirement information or angle/direction requirement information between the source UE and the candidate UE. For example, a distance between the source UE and the candidate UE needs to be less than 100 meters, or the candidate UE needs to be located in the left direction of the source UE. The location of the source UE in the discovery request message #1 may be represented by using an absolute coordinate of a geographical location.

In an example, when step S530 is performed, the source UE may send the discovery request message #1 in the target sensing direction #1. The discovery request message #1 carries the discovery purpose and the information about the requirement for the sensing capability of the candidate UE. The discovery request message #1 may further include one or more of the following: the location of the source UE, and the distance or angle/direction requirement information between the source UE and the candidate UE. In this implementation, the candidate UE meeting the requirement can be quickly and accurately obtained. The source UE may adjust, based on internal implementation, a direction of sending the discovery request message #1.

In another example, when step S530 is not performed, the source UE may send the discovery request message #1 in all the directions. It may be understood as that the source UE broadcasts the discovery request message #1 in all the directions. The discovery request message #1 carries the discovery purpose and the information about the requirement for the sensing capability of the candidate UE. The discovery request message #1 may further include one or more of the following: the location of the source UE and the distance requirement information between the source UE and the candidate UE or the angle/direction requirement information between the source UE and the candidate UE. Correspondingly, all UEs that receive the discovery request message #1 may determine whether a condition is met. If the condition is met, a response is sent to the source UE. For example, a method for determining, by all the UEs that receive the discovery request message #1, whether the condition is met may be as follows: The UEs that receive the discovery request message #1 determine, based on their locations and the location of the source UE, whether distances/directions between the source UE and the UEs meet the distance or angle/direction requirement information between the source UE and the candidate UE that is carried in the discovery request message #1.

S550. The candidate UE #1 and the candidate UE #2 send discovery response messages #1 to the source UE.

Correspondingly, the source UE receives the discovery response messages #1 sent from the candidate UE #1 and the candidate UE #2.

For example, based on the foregoing step S540, after determining that the requirement is met, the candidate UE #1 and the candidate UE #2 send the discovery response messages #1 to the source UE. That is, the candidate UE #1 and the candidate UE #2 have a sensing capability, and can perform cooperative sensing.

It should be noted that, in this embodiment of this application, a location of the candidate UE may be in the target sense area or outside the target sense area. For example, the UE that receives the discovery request message #1 is located in the target sense area range of 5 meters multiplied by 5 meters, and the UE can provide, to the source UE by using a sensing capability of the UE, sensing information in an area of 5 meters multiplied by 5 meters around a location of the UE. Alternatively, the UE that receives the discovery request message #1 is located outside the target sense area range of 5 meters multiplied by 5 meters, but the UE has a strong sensing capability, and can provide, to the source UE, sensing information in an area of 5 meters multiplied by 5 meters away from a location of the UE.

Optionally, the discovery response messages #1 include location information of the candidate UE #1 and the candidate UE #2, for example, geographical coordinate systems (for example, longitude and latitude information) of the candidate UE #1 and the candidate UE #2, or absolute coordinate values. For example, the source UE may determine a distance #1 between the source UE and the candidate UE #1 and a distance #2 between the source UE and the candidate UE #2 in time based on the received location information of the candidate UE #1 and the candidate UE #2, and further determine a specific sense area size and/or direction for performing a sensing operation by the candidate UE #1 and the candidate UE #2.

For example, the discovery response message #1 may be a Discovery Response message.

For ease of description, in this embodiment of this application, a UE that returns the Discovery Response message is referred to as a candidate UE. If in the process, there are a plurality of candidate UEs meeting the condition, there are a plurality of UEs returning the Discovery Response message, for example, the candidate UE #1 and the candidate UE #2. In addition, another UE that does not meet the condition (for example, the UE that does not have a sensing capability, or does not have a capability of performing cooperative sensing, or is located outside the target sense area) may not return the Discovery Response message.

S560. The source UE establishes a PC5 connection to each of the candidate UE #1 and the candidate UE #2.

For a specific implementation of a PC5 connection establishment procedure, refer to a conventional technology. For brevity, details are not described herein.

S570. Optionally, the source UE initiates a ranging (Ranging) procedure, to determine the distance #1 between the source UE and the candidate UE #1 and the distance #2 between the source UE and the candidate UE #2.

It should be noted that, if the source UE cannot further determine the distance #1 between the source UE and the candidate UE #1 and the distance #2 between the source UE and the candidate UE #2 in the discovery process of the foregoing steps S540 and S550, the source UE may initiate a ranging procedure. The procedure is performed to measure the distance #1 between the source UE and the candidate UE #1 and the distance #2 between the source UE and the candidate UE #2. For a specific implementation of the ranging procedure, refer to a conventional technology. For brevity, details are not described herein.

That is, if the discovery response messages #1 in the foregoing step S540 carry the location information of the candidate UE #1 and the candidate UE #2, step S570 may not be performed.

S581. The source UE determines, based on the target sense area information, sense area information #1 for performing sensing measurement by the candidate UE #1.

In a possible implementation, the source UE determines, based on the distance #1 and the target sense area information, the sense area information #1 for performing sensing measurement by the candidate UE #1. For example, it is assumed that the source UE is located at an origin of a coordinate system, the application layer requests to sense an area range (that is, the target sense area) that is in a right front direction (that is, the target sensing direction #1) of the source UE and whose size is 4 meters multiplied by 4 meters, that is, an area including coordinates (-2, 2), (2, 2), (-2, 6), and (2, 6), the candidate UE #1 is located in the right front direction of the source UE, and the distance #1 is 6 m, which may be understood as that the candidate UE #1 is at a location whose coordinates are (0, 6). In this case, the sense area information #1 may be an area range that is in the right front direction of the source UE and whose size is 4 meters multiplied by 2 meters, corresponding to an area including coordinates (-2, 4), (2, 4), (-2, 6), and (2, 6).

In another possible implementation, the source UE uses the target sense area information as the sense area information #1 for performing sensing measurement by the candidate UE #1. For example, assuming that the source UE is located at an origin of a coordinate system, and the application layer requests to sense an area range (that is, the target sense area) that is in a right front direction (that is, the target sensing direction #1) of the source UE and whose size is 4 meters multiplied by 4 meters, that is, an area including coordinates (-2, 2), (2, 2), (-2, 6), and (2, 6), the source UE directly sends the target sense area information to the candidate UE #1.

For example, the sense area information #1 may alternatively be represented by a sense area size #1 and/or direction #1.

S582. The source UE sends a sensing measurement request message #1 to the candidate UE #1.

Correspondingly, the candidate UE #1 receives the sensing measurement request message #1 from the source UE.

The sensing measurement request message #1 is used to request the candidate UE #1 to perform sensing measurement, and the sensing measurement request message #1 includes a sensing mode (for example, monostatic sensing) and the sense area information #1.

Optionally, the sensing measurement request message #1 further includes one or more of the following: a sensing measurement periodicity, delay information #1, or a reporting periodicity of sensing data (that is, sensing data #1). The sensing measurement periodicity may indicate a periodicity in which the candidate UE #1 performs sensing measurement, and the delay information #1 may indicate a latest time at which the candidate UE #1 responds to the sensing measurement request message #1. The reporting periodicity of sensing data indicates a periodicity in which the candidate UE #1 returns a sensing measurement response message #1.

It should be noted that, in an implementation, the candidate UE #1 may perform a plurality of times of sensing measurement, and send data of the plurality of times of sensing measurement to the source UE together. In another implementation, the candidate UE #1 may send data of sensing measurement to the source UE each time the sensing measurement is completed.

The source UE may determine, based on the delay information and the reporting periodicity of sensing data that are carried in the cooperative sensing request message #1, the sensing measurement periodicity, the delay information #1, or the reporting periodicity of sensing data (that is, the sensing data #1) that is carried in the sensing measurement request message #1.

S583. The candidate UE #1 performs sensing measurement to obtain the sensing data #1.

Optionally, the candidate UE #1 further determines a sensing result #1 based on the sensing data #1. For a specific implementation of obtaining the sensing result based on the sensing data, refer to a conventional technology. For brevity, details are not described herein.

For example, the candidate UE #1 performs sensing measurement for the specific sense area size #1 and/or direction #1 in the sensing mode of monostatic sensing.

S584. The candidate UE #1 sends a sensing measurement response message #1 to the source UE.

Correspondingly, the source UE receives the sensing measurement response message #1 from the candidate UE #1.

The sensing measurement response message #1 includes the sensing data #1 or the sensing result #1.

S585. The source UE determines, based on the target sense area information, sense area information #2 for performing sensing measurement by the candidate UE #2.

In a possible implementation, the source UE determines, based on the distance #2 and the target sense area information, the sense area information #2 for performing sensing measurement by the candidate UE #2. For example, it is assumed that the source UE is located at an origin of a coordinate system, the application layer requests to sense an area range (that is, the target sense area) that is in a right front direction (that is, the target sensing direction #1) of the source UE and whose size is 4 meters multiplied by 4 meters, that is, an area including coordinates (-2, 2), (2, 2), (-2, 6), and (2, 6), the candidate UE #2 is located in the right front direction of the source UE, and the distance #1 is 2 m, which may be understood as that the candidate UE #2 is at a location whose coordinates are (0, 2). In this case, the sense area information #2 may be an area range that is in the right front direction of the source UE and whose size is 4 meters multiplied by 2 meters, corresponding to an area including coordinates (-2, 2), (2, 2), (-2, 4), and (2, 4).

In another possible implementation, the source UE uses the target sense area information as the sense area information #2 for performing sensing measurement by the candidate UE #2. For example, assuming that the source UE is located at an origin of a coordinate system, and the application layer requests to sense an area range (that is, the target sense area) that is in a right front direction (that is, the target sensing direction #1) of the source UE and whose size is 4 meters multiplied by 4 meters, that is, an area including coordinates (-2, 2), (2, 2), (-2, 6), and (2, 6), the source UE directly sends the target sense area information to the candidate UE #2.

For example, the sense area information #2 may alternatively be represented by a sense area size #2 and/or direction #2.

It should be noted that, when there are a plurality of candidate UEs, area sizes for which the source UE requests different candidate UEs to perform sensing measurement may be the same or different. For example, the sense area sizes determined in steps S581 and S585 may be both greater than or equal to the size of the target sense area specified in step S520, or a sum of the sense area size in step S581 and the sense area size in step S585 may be greater than or equal to the size of the target sense area specified in step S520. This is not specifically limited in this application. That is, based on sensing measurement of the candidate UE #1 and the candidate UE #2, the source UE may obtain sensing data or a sensing result corresponding to the target sense area and the target sensing direction.

S586. The source UE sends a sensing measurement request message #2 to the candidate UE #2.

Correspondingly, the candidate UE #2 receives the sensing measurement request message #2 from the source UE.

The sensing measurement request message #2 is used to request the candidate UE #2 to perform sensing measurement, and the sensing measurement request message #2 includes a sensing mode (for example, monostatic sensing) and the sense area information #2.

Optionally, the sensing measurement request message #2 further includes one or more of the following: a sensing measurement periodicity, delay information #2, or a reporting periodicity of sensing data (that is, sensing data #2). The sensing measurement periodicity may indicate a periodicity in which the candidate UE #2 performs sensing measurement, and the delay information #2 may indicate a latest time at which the candidate UE #2 responds to the sensing measurement request message #2. The reporting periodicity of sensing data indicates a periodicity in which the candidate UE #2 returns a sensing measurement response message #2. It should be noted that, in an implementation, the candidate UE #2 may perform a plurality of times of sensing measurement, and send data of the plurality of times of sensing measurement to the source UE together. In another implementation, the candidate UE #2 may send data of sensing measurement to the source UE each time the sensing measurement is completed.

The source UE may determine, based on the delay information and the reporting periodicity of sensing data that are carried in the cooperative sensing request message #2, the sensing measurement periodicity, the delay information #2, or the reporting periodicity of sensing data (that is, the sensing data #1) that is carried in the sensing measurement request message #2.

It should be noted that when there are a plurality of candidate UEs, parameters carried in the sensing measurement request message #1 and the sensing measurement request message #2 may be the same or different. This is not limited in this application.

S587. The candidate UE #2 performs sensing measurement to obtain the sensing data #2.

Optionally, the candidate UE #2 further determines a sensing result #2 based on the sensing data #2.

For example, the candidate UE #2 performs sensing measurement for the specific sense area size #2 and/or direction #2 in the sensing mode of monostatic sensing.

S588. The candidate UE #2 sends a sensing measurement response message #2 to the source UE.

Correspondingly, the source UE receives the sensing measurement response message #2 from the candidate UE #2.

The sensing measurement response message #2 includes the sensing data #2 or the sensing result #2.

S590. The source UE sends a cooperative sensing response message #1 to the application layer.

Correspondingly, the application layer receives the cooperative sensing response message #1 from the source UE.

The cooperative sensing response message #1 includes the sensing data #1 or the sensing result #1 in step S584, and the sensing data #2 or the sensing result #2 in step S588.

Further, the application layer locally fuses all sensing data based on the received sensing data #1 or sensing result #1, the received sensing data #2 or sensing result #2, and the sensing data # obtained in step S513.

According to the technical solution of this application, the source UE controls the candidate UE (for example, the candidate UE #1 and the candidate UE #2) to perform sensing measurement in a corresponding sense area, and obtains sensing measurement data or a sensing result from the candidate UE, so that the application layer senses an environment or object around the source UE.

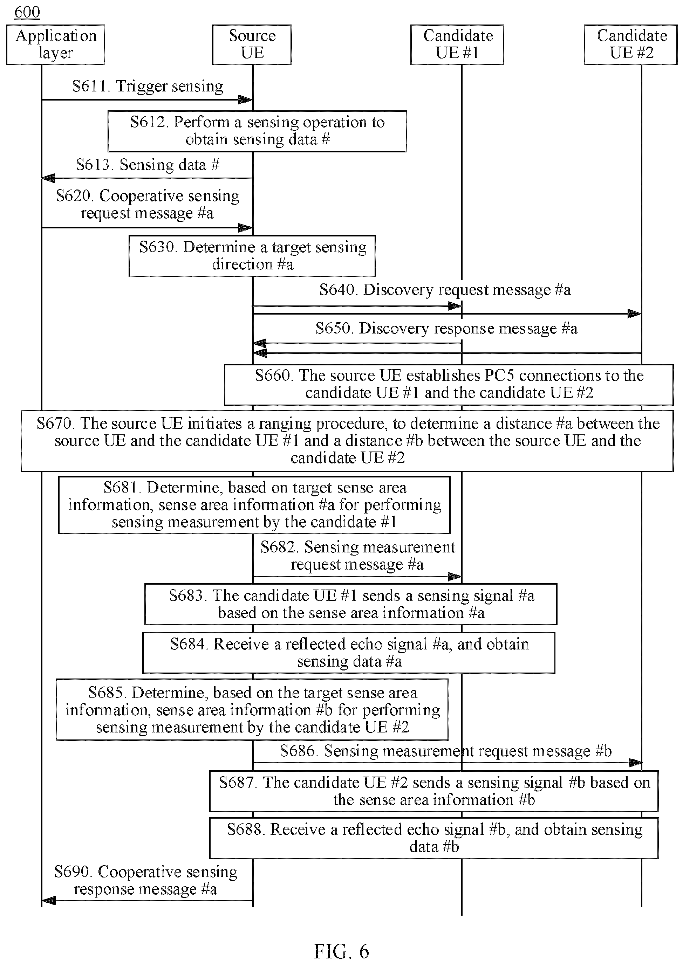

FIG. 6 is an example flowchart of a third communication sensing method 600 according to an embodiment of this application. In this implementation, a source UE triggers a candidate UE (for example, a candidate UE #1 and a candidate UE #2) to perform sensing measurement for a specific sense area size and/or direction. A difference from the foregoing method 500 lies in a different sensing mode, and other steps are similar thereto. As shown in FIG. 6, the method includes the following steps.

S611. An application layer triggers a source UE to perform sensing.

S612. The source UE performs a sensing operation to obtain sensing data #.

S613. The source UE sends the sensing data # to the application layer.

Correspondingly, the application layer receives the sensing data # from the source UE.

S620. The application layer sends a cooperative sensing request message #a to the source UE.

Correspondingly, the source UE receives the cooperative sensing request message #a from the application layer.

The cooperative sensing request message #a includes indication information of target sense area information. For example, the target sense area information includes a target sense area #a and/or a target sensing direction #a.

It should be understood that a meaning and carried specific content of the cooperative sensing request message #a are similar to those of the cooperative sensing request message #1 in step S520 in the foregoing method 500. For brevity, details are not described herein again.

S630. Optionally, the source UE determines the target sensing direction #a.

S640. The source UE sends a discovery request message #a to another UE (for example, a candidate UE #1 and a candidate UE #2).

Correspondingly, the another UE (for example, the candidate UE #1 and the candidate UE #2) receives the discovery request message #a from the source UE.

A meaning and carried specific content of the discovery request message #a are similar to those of the discovery request message #1 in step S540 in the foregoing method 500. For brevity, details are not described herein again.

In an example, the source UE may send the discovery request message #a in the target sensing direction #a. In this implementation, a candidate UE meeting a requirement can be quickly and accurately obtained.

In another example, the source UE may send the discovery request message #a in all directions. For example, the discovery request message #a is a broadcast message.

S650. The candidate UE #1 and the candidate UE #2 send discovery response messages #a to the source UE.

Correspondingly, the source UE receives the discovery response messages #a sent from the candidate UE #1 and the candidate UE #2.

Optionally, the discovery response messages #a include location information of the candidate UE #1 and the candidate UE #2.

S660. The source UE establishes a PC5 connection to each of the candidate UE #1 and the candidate UE #2.

S670. Optionally, the source UE initiates a ranging (Ranging) procedure, to determine a distance #a between the source UE and the candidate UE #1 and a distance #b between the source UE and the candidate UE #2.

For a specific implementation of steps S611 to S670, refer to steps S511 to S570 in the foregoing method 500. For brevity, details are not described herein again.

S681. The source UE determines, based on the target sense area information, sense area information #a for performing sensing measurement by the candidate UE #1.

For a specific implementation of determining the sense area information #a for performing sensing measurement by the candidate UE #1, refer to step S581 in the foregoing method 500. Details are not described herein again.

S682. The source UE sends a sensing measurement request message #a to the candidate UE #1.

Correspondingly, the candidate UE #1 receives the sensing measurement request message #a from the source UE.

The sensing measurement request message #a is used to request the candidate UE #1 to perform sensing measurement, and the sensing measurement request message #a includes a sensing mode (for example, the candidate UE #1 sends a sensing signal, and the source UE receives a reflected echo signal) and the sense area information #a.

Optionally, the sensing measurement request message #a further includes a sensing measurement periodicity. The sensing measurement periodicity may indicate a periodicity in which the candidate UE #1 sends the sensing signal.

S683. The candidate UE #1 performs sensing measurement.

For example, the candidate UE #1 sends a sensing signal #a based on the sense area information #a.

S684. Correspondingly, the source UE receives the sensing signal #a from the candidate UE #1, that is, the source UE receives a reflected echo signal #a, and obtains sensing data #a.

Optionally, the source UE further determines a sensing result #a based on the sensing data #a. For a specific implementation of obtaining the sensing result based on the sensing data, refer to a conventional technology. For brevity, details are not described herein.

S685. The source UE determines, based on the target sense area information, sense area information #b for performing sensing measurement by the candidate UE #2.

For a specific implementation of determining the sense area information #b for performing sensing measurement by the candidate UE #2, refer to step S585 in the foregoing method 500. Details are not described herein again.

S686. The source UE sends a sensing measurement request message #b to the candidate UE #2.

Correspondingly, the candidate UE #2 receives the sensing measurement request message #b from the source UE.

The sensing measurement request message #b is used to request the candidate UE #2 to perform sensing measurement, and the sensing measurement request message #a includes a sensing mode (for example, the candidate UE #2 sends a sensing signal, and the source UE receives a reflected echo signal) and the sense area information #b.

Optionally, the sensing measurement request message #a further includes a sensing measurement periodicity. The sensing measurement periodicity may indicate a periodicity in which the candidate UE #2 sends the sensing signal.

S687. The candidate UE #2 performs sensing measurement.

For example, the candidate UE #2 sends a sensing signal #b based on the sense area information #b.

S688. Correspondingly, the source UE receives the sensing signal #b from the candidate UE #2, that is, the source UE receives a reflected echo signal #b, and obtains sensing data #b.

Optionally, the source UE further determines a sensing result #b based on the sensing data #b.

It should be noted that, sense area sizes determined in steps S681 and S685 may be both greater than or equal to a size of the target sense area specified in step S620, or a sum of the sense area size in step S681 and the sense area size in step S685 may be greater than or equal to the size of the target sense area specified in step S620. This is not specifically limited in this application. That is, based on sensing measurement of the candidate UE #1 and the candidate UE #2, the source UE may obtain sensing data or a sensing result corresponding to the target sense area and the target sensing direction.

S690. The source UE sends a cooperative sensing response message #a to the application layer.

Correspondingly, the application layer receives the cooperative sensing response message #a from the source UE.

The cooperative sensing response message #a includes the sensing data #a or the sensing result #a in step S684, and the sensing data #b or the sensing result #b in step S688.

Further, the application layer locally fuses all sensing data based on the received sensing data #a or sensing result #a, the received sensing data #b or sensing result #b, and the sensing data # obtained in step S613.

According to the technical solution of this application, the source UE controls the candidate UE (for example, the candidate UE #1 and the candidate UE #2) to perform sensing measurement in a corresponding sense area, and obtains sensing measurement data or a sensing result from the candidate UE, so that the application layer senses an environment or object around the source UE.

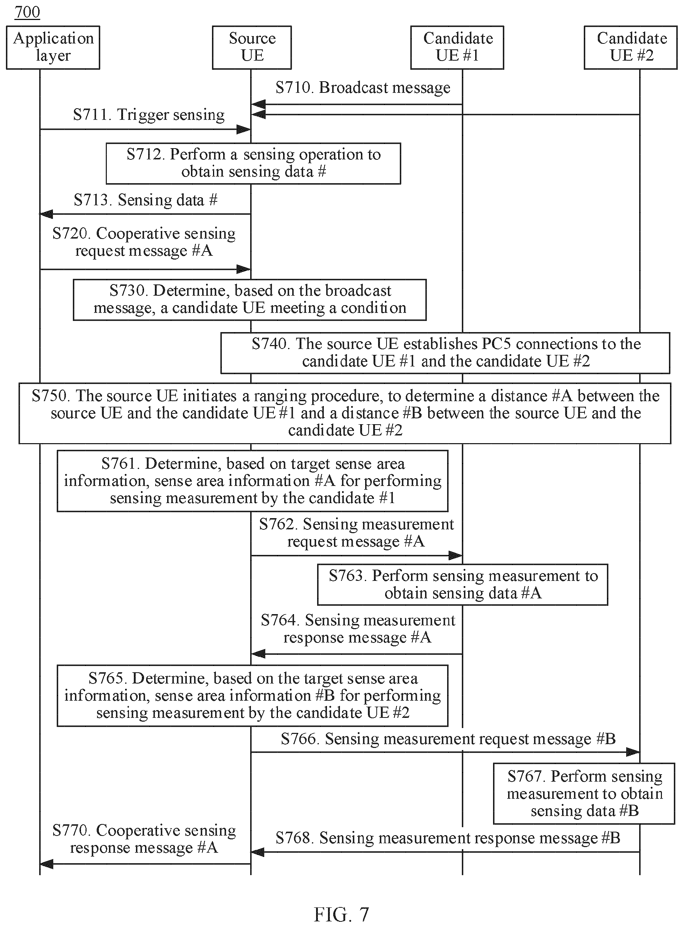

FIG. 7 is an example flowchart of a fourth communication sensing method 700 according to an embodiment of this application. In this implementation, a UE (for example, a candidate UE #1 and a candidate UE #2) having a sensing capability sends a broadcast message, to notify a source UE that the UE has a sensing capability and can assist the source UE in performing sensing measurement. In the methods 500 and 600, the source UE actively discovers, based on a sensing demand of the source UE, another UE around as a candidate UE to cooperatively assist in sensing an environment around, while in the method 700, another UE first broadcasts a sensing capability of the UE to the source UE, and the source UE further determines, based on a distance, a sense area size and/or direction for performing a sensing operation by the candidate UE. As shown in FIG. 7, the method includes the following steps.

S710. Another UE (for example, a candidate UE #1 and a candidate UE #2) sends a broadcast message (that is, a first broadcast message) to a source UE.

Correspondingly, the source UE receives broadcast messages from the candidate UE #1 and the candidate UE #2.

The broadcast messages indicate that the candidate UE #1 and the candidate UE #2 have a sensing capability and can assist the source UE in performing sensing measurement. For example, the candidate UE #1 and the candidate UE #2 support a sensing mode of monostatic sensing, where the candidate UE sends a sensing signal and receives a reflected echo signal.

For example, the broadcast messages may carry sensing capabilities of the candidate UE #1 and the candidate UE #2, and indication information #A. The indication information #A indicates that the candidate UE #1 and the candidate UE #2 can assist the source UE in performing sensing measurement.

Optionally, the broadcast messages may further carry location information of the candidate UE #1 and the candidate UE #2, for example, geographical coordinate systems (for example, longitude and latitude information) of the candidate UE #1 and the candidate UE #2, or absolute coordinate values.

S711. An application layer triggers the source UE to perform sensing.

S712. The source UE performs a sensing operation to obtain sensing data #.

S713. The source UE sends the sensing data # to the application layer.

Correspondingly, the application layer receives the sensing data # from the source UE.

S720. The application layer sends a cooperative sensing request message #A to the source UE.

Correspondingly, the source UE receives the cooperative sensing request message #A from the application layer.

A meaning and carried specific content of the cooperative sensing request message #A are similar to those of the cooperative sensing request message #1 in step S520 in the foregoing method 500. For brevity, details are not described herein again.

For a specific implementation of steps S711 to S720, refer to steps S511 to S520 in the foregoing method 500. For brevity, details are not described herein again.

S730. The source UE determines, based on the broadcast message, a candidate UE meeting a condition.

The condition herein may be understood as having a sensing capability and supporting cooperative sensing measurement.

For example, the source UE determines, based on the broadcast messages in step S710, that other UEs around (for example, the candidate UE #1 and the candidate UE #2) have a sensing capability, and the candidate UE #1 and the candidate UE #2 have a capability of performing cooperative sensing.

Further, if the broadcast messages carry the location information of the candidate UE #1 and the candidate UE #2, the source UE may further determine, based on the location information of the candidate UE #1 and the candidate UE #2, a distance #A between the source UE and the candidate UE #1 and a distance #B between the source UE and the candidate UE #2, and then determine a specific sense area size and/or direction for performing a sensing operation by each candidate UE.

S740. The source UE establishes a PC5 connection to each of the candidate UE #1 and the candidate UE #2.

S750. Optionally, the source UE initiates a ranging (Ranging) procedure, to determine the distance #A between the source UE and the candidate UE #1 and the distance #B between the source UE and the candidate UE #2.

S761. The source UE determines, based on the target sense area information, sense area information #A for performing sensing measurement by the candidate UE #1.

For a specific implementation of determining the sense area information #A for performing sensing measurement by the candidate UE #1, refer to step S581 in the foregoing method 500. Details are not described herein again.

S762. The source UE sends a sensing measurement request message #A to the candidate UE #1.

Correspondingly, the candidate UE #1 receives the sensing measurement request message #A from the source UE.

A meaning and carried specific content of the sensing measurement request message #A are similar to those of the sensing measurement request message #1 in step S582 in the foregoing method 500. For brevity, details are not described herein again.

S763. The candidate UE #1 performs sensing measurement to obtain sensing data #A.

For example, the candidate UE #1 performs sensing measurement for a specific sense area size #A and/or direction #A in the sensing mode of monostatic sensing.

S764. The candidate UE #1 sends a sensing measurement response message #A to the source UE.

Correspondingly, the source UE receives the sensing measurement response message #A from the candidate UE #1.

S765. The source UE determines, based on the target sense area information, sense area information #B for performing sensing measurement by the candidate UE #2.

For a specific implementation of determining the sense area information #B for performing sensing measurement by the candidate UE #2, refer to step S585 in the foregoing method 500. Details are not described herein again.

S766. The source UE sends a sensing measurement request message #B to the candidate UE #2.

Correspondingly, the candidate UE #2 receives the sensing measurement request message #B from the source UE.

A meaning and carried specific content of the sensing measurement request message #B are similar to those of the sensing measurement request message #2 in step S586 in the foregoing method 500. For brevity, details are not described herein again.

S767. The candidate UE #2 performs sensing measurement to obtain sensing data #B.

For example, the candidate UE #2 performs sensing measurement for a specific sense area size #B and/or direction #B in the sensing mode of monostatic sensing.

S768. The candidate UE #2 sends a sensing measurement response message #B to the source UE.

Correspondingly, the source UE receives the sensing measurement response message #B from the candidate UE #2.

S770. The source UE sends a cooperative sensing response message #A to the application layer.

Correspondingly, the application layer receives the cooperative sensing response message #A from the source UE.

For a specific implementation of steps S740 to S770, refer to steps S560 to S590 in the foregoing method 500. For brevity, details are not described herein again.

According to the technical solution of this application, the source UE controls the candidate UE (for example, the candidate UE #1 and the candidate UE #2) to perform sensing measurement in a corresponding sense area, and obtains sensing measurement data or a sensing result from the candidate UE, so that the application layer senses an environment or object around the source UE.

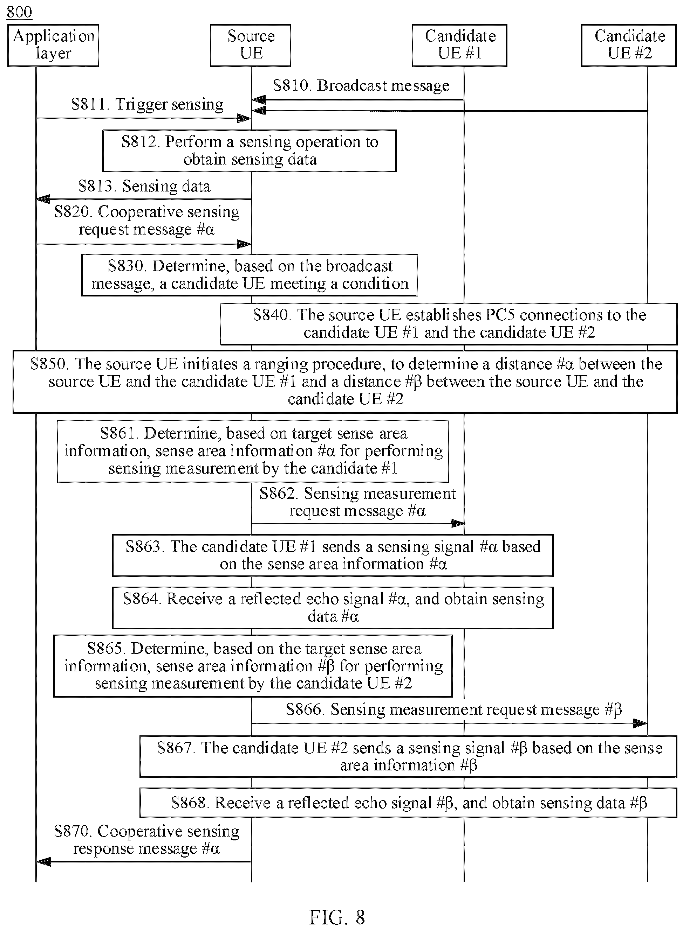

FIG. 8 is a schematic flowchart of a fifth communication sensing method 800 according to an embodiment of this application. In this implementation, a UE (for example, a candidate UE #1 and a candidate UE #2) having a sensing capability sends a broadcast message, to notify a source UE that the UE has a sensing capability and can assist the source UE in performing sensing measurement. A difference from the foregoing method 700 lies in a different sensing mode, and other steps are similar thereto. As shown in FIG. 8, the method includes the following steps.

S810. Another UE (for example, a candidate UE #1 and a candidate UE #2) sends a broadcast message (that is, a first broadcast message) to a source UE.

Correspondingly, the source UE receives broadcast messages from the candidate UE #1 and the candidate UE #2.

The broadcast messages indicate that the candidate UE #1 and the candidate UE #2 have a sensing capability and can assist the source UE in performing sensing measurement. For example, the candidate UE #1 and the candidate UE #2 support a sensing mode of transmitter-initiated bistatic sensing, where the candidate UE #1 and the candidate UE #2 send sensing signals, and the source UE receives reflected echo signals.

For example, the broadcast messages may carry sensing capabilities of the candidate UE #1 and the candidate UE #2, and indication information #A. The indication information #A indicates that the candidate UE #1 and the candidate UE #2 can assist the source UE in performing sensing measurement.

Optionally, the broadcast messages may further carry location information of the candidate UE #1 and the candidate UE #2, for example, geographical coordinate systems (for example, longitude and latitude information) of the candidate UE #1 and the candidate UE #2, or absolute coordinate values.

S811. An application layer triggers the source UE to perform sensing.

S812. The source UE performs a sensing operation to obtain sensing data #.

S813. The source UE sends the sensing data # to the application layer.

Correspondingly, the application layer receives the sensing data # from the source UE.

S820. The application layer sends a cooperative sensing request message #α to the source UE.

Correspondingly, the source UE receives the cooperative sensing request message #α from the application layer.

It should be understood that a meaning and carried specific content of the cooperative sensing request message #α herein are similar to those of the cooperative sensing request message #1 in step S520 in the foregoing method 500. For brevity, details are not described herein again.

For a specific implementation of steps S811 to S820, refer to steps S611 to S620 in the foregoing method 600. For brevity, details are not described herein again.

S830. The source UE determines, based on the broadcast message, a candidate UE meeting a condition.

The condition herein may be understood as having a sensing capability and supporting cooperative sensing measurement.

For example, the source UE determines, based on the broadcast messages in step S810, that other UEs around (for example, the candidate UE #1 and the candidate UE #2) have a sensing capability, and the candidate UE #1 and the candidate UE #2 have a capability of performing cooperative sensing.

Further, if the broadcast messages carry the location information of the candidate UE #1 and the candidate UE #2, the source UE may further determine, based on the location information of the candidate UE #1 and the candidate UE #2, a distance #1 between the source UE and the candidate UE #1 and a distance #2 between the source UE and the candidate UE #2, and then determine a specific sense area size and/or direction for performing a sensing operation by each candidate UE.

S840. The source UE establishes a PC5 connection to each of the candidate UE #1 and the candidate UE #2.

S850. Optionally, the source UE initiates a ranging (Ranging) procedure, to determine the distance #α between the source UE and the candidate UE #1 and the distance #β between the source UE and the candidate UE #2.

For a specific implementation of steps S840 and S850, refer to steps S660 and S670 in the foregoing method 600. For brevity, details are not described herein again.

S861. The source UE determines, based on target sense area information, sense area information #α for performing sensing measurement by the candidate UE #1.

For a specific implementation of determining the sense area information #α for performing sensing measurement by the candidate UE #1, refer to step S681 in the foregoing method 600. Details are not described herein again.

S862. The source UE sends a sensing measurement request message #α to the candidate UE #1.

Correspondingly, the candidate UE #1 receives the sensing measurement request message #α from the source UE.

A meaning and carried specific content of the sensing measurement request message #α are similar to those of the sensing measurement request message #a in step S682 in the foregoing method 600. For brevity, details are not described herein again.

S863. The candidate UE #1 performs sensing measurement.

For example, the candidate UE #1 sends a sensing signal #α based on the sense area information #α.

S864. Correspondingly, the source UE receives the sensing signal #α from the candidate UE #1, that is, the source UE receives a reflected echo signal #α, and obtains sensing data #α.

S865. The source UE determines, based on the target sense area information, sense area information #β for performing sensing measurement by the candidate UE #2.

For a specific implementation of determining the sense area information #β for performing sensing measurement by the candidate UE #2, refer to step S685 in the foregoing method 600. Details are not described herein again.

S866. The source UE sends a sensing measurement request message #β to the candidate UE #2.

Correspondingly, the candidate UE #2 receives the sensing measurement request message #β from the source UE.

A meaning and carried specific content of the sensing measurement request message #β are similar to those of the sensing measurement request message #b in step S686 in the foregoing method 600. For brevity, details are not described herein again.

S867. The candidate UE #2 performs sensing measurement.

For example, the candidate UE #2 sends a sensing signal #β based on the sense area information ##β.

S868. Correspondingly, the source UE receives the sensing signal #β from the candidate UE #2, that is, the source UE receives a reflected echo signal #β, and obtains sensing data #β.

S870. The source UE sends a cooperative sensing response message #α to the application layer.

Correspondingly, the application layer receives the cooperative sensing response message #α from the source UE.

For a specific implementation of steps S861 to S870, refer to steps S681 to S690 in the foregoing method 600. For brevity, details are not described herein again.

According to the technical solution of this application, the source UE controls the candidate UE (for example, the candidate UE #1 and the candidate UE #2) to perform sensing measurement in a corresponding sense area, and obtains sensing measurement data or a sensing result from the candidate UE, so that the application layer senses an environment or object around the source UE.

It should be understood that, in the foregoing methods 500 to 800, the source UE dynamically triggers the candidate UE to perform sensing measurement, while in below method 900, the candidate UE obtains sensing data in advance and exposes the sensing data to the source UE, that is, the source UE does not need to trigger the candidate UE to perform sensing measurement, but may directly request to obtain the sensing data from the candidate UE.

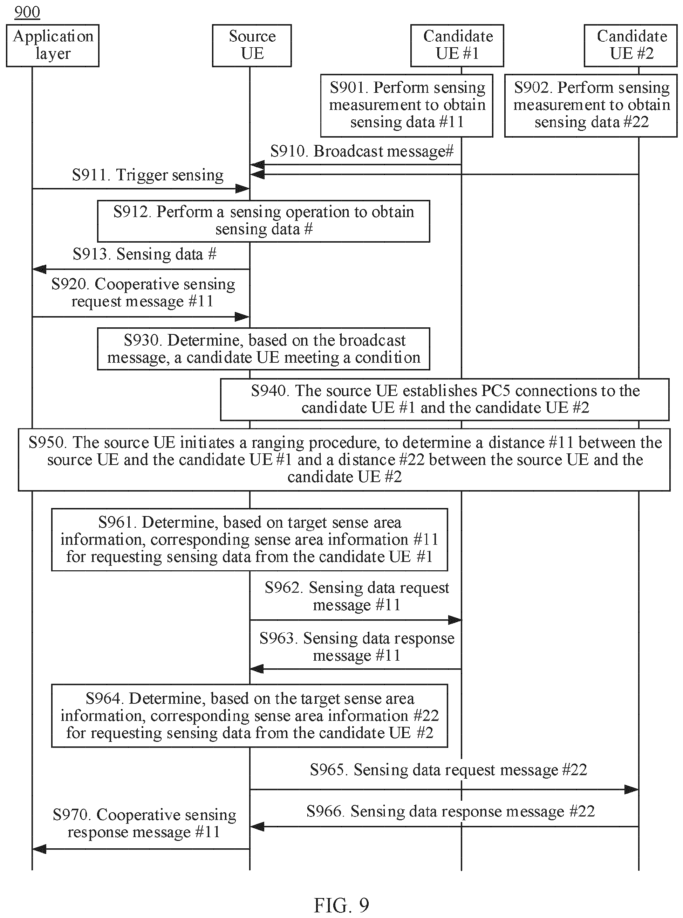

FIG. 9 is a schematic flowchart of a sixth communication sensing method 900 according to an embodiment of this application. In this implementation, a candidate UE may broadcast to outside that the candidate UE is allowed to expose local sensing data and a sensing direction associated with the sensing data, and a source UE selects a final candidate UE based on a distance between the source UE and the candidate UE, and obtains, from the candidate UE based on a target sensing direction indicated in a sensing request from the application layer, sensing data in the target sensing direction. As shown in FIG. 9, the method includes the following steps.

S901. A candidate UE #1 performs sensing measurement to obtain sensing data #11.

S902. A candidate UE #2 performs sensing measurement to obtain sensing data #22.

Optionally, the candidate UE #1 further determines a sensing result #11 based on the sensing data #11, and the candidate UE #2 further determines a sensing result #22 based on the sensing data #22.

For example, the candidate UE #1 supports sensing measurement for a range of 50 meters in front of the candidate UE #1, and obtains sensing data of the area; and the candidate UE #2 supports sensing measurement for a range of 100 meters in rear of the candidate UE #2, and obtains sensing data of the area.

A sensing mode in which the candidate UE #1 and the candidate UE #2 perform sensing measurement may be monostatic sensing, transmitter-initiated bistatic sensing, or receiver-initiated bistatic sensing. This is not specifically limited in this application. For example, the candidate UE #1 performs sensing measurement in the sensing mode of monostatic sensing, including sending a sensing signal #11 and receiving a reflected echo signal #11. For another example, the candidate UE #2 performs sensing measurement in the sensing mode of receiver-initiated bistatic sensing, including that another UE sends a sensing signal #22, and the candidate UE #2 receives a reflected echo signal #22.

S910. Another UE (for example, the candidate UE #1 and the candidate UE #2) sends a broadcast message # (that is, a second broadcast message) to a source UE.

Correspondingly, the source UE receives broadcast messages # from the candidate UE #1 and the candidate UE #2.

The broadcast messages # carry indication information #11, and the indication information #11 indicates that the candidate UE #1 and the candidate UE #2 support exposure of local sensing data to outside.

Optionally, the broadcast messages # may further carry sense area information corresponding to sensing data whose exposure to outside is supported, for example, a sense area size and/or direction.

For example, the candidate UE #1 is allowed to expose sensing data within a range of 50 meters in front of the candidate UE #1 to the source UE, and the candidate UE #2 is allowed to expose sensing data within a range of 100 meters in rear of the candidate UE #2 to the source UE.

Optionally, the broadcast messages # may further carry location information of the candidate UE #1 and the candidate UE #2, for example, geographical coordinate systems (for example, longitude and latitude information) of the candidate UE #1 and the candidate UE #2, or absolute coordinate values.

S911. An application layer triggers the source UE to perform sensing.

S912. The source UE performs a sensing operation to obtain sensing data #.

S913. The source UE sends the sensing data # to the application layer.

Correspondingly, the application layer receives the sensing data # from the source UE.

S920. The application layer sends a cooperative sensing request message #11 to the source UE.

Correspondingly, the source UE receives the cooperative sensing request message #11 from the application layer.

A meaning and carried specific content of the cooperative sensing request message #11 are similar to those of the cooperative sensing request message #A in step S720 in the foregoing method 700. For brevity, details are not described herein again.

S930. The source UE determines, based on the broadcast message # sent by the candidate UE, a candidate UE meeting a condition.

For example, the source UE may determine the candidate UE based on the indication information #11 and the sense area information corresponding to the sensing data whose exposure to outside is supported that are carried in the broadcast messages #.

S940. The source UE establishes a PC5 connection to each of the candidate UE #1 and the candidate UE #2.

S950. Optionally, the source UE initiates a ranging (Ranging) procedure, to determine a distance #11 between the source UE and the candidate UE #1 and a distance #22 between the source UE and the candidate UE #2.

For a specific implementation of steps S911 to S950, refer to steps S711 to S750 in the foregoing method 700. For brevity, details are not described herein again.

S961. The source UE determines, based on target sense area information, corresponding sense area information #11, for example, a sense area size #11 and/or direction #11, for requesting sensing data from the candidate UE #1.

For a manner of determining the corresponding sense area information #11 for requesting sensing data from the candidate UE #1, refer to step S581 in the foregoing method 500. Details are not described herein again.

S962. The source UE sends a sensing data request message #11 to the candidate UE #1.

Correspondingly, the candidate UE #1 receives the sensing data request message #11 from the source UE.

The sensing data request message #11 carries the corresponding sense area information #11 that is determined in step S961 for requesting sensing data from the candidate UE #1.

S963. The candidate UE #1 sends a sensing data response message #11 to the source UE.

Correspondingly, the source UE receives the sensing data response message #11 from the candidate UE #1.

The sensing data response message #11 includes sensing data #111 or a sensing result #111.

The sensing data #111 or the sensing result #111 is determined by the candidate UE #1 based on the sense area information #11 and local sensing data whose exposure to outside is supported. It may be understood that sense area information corresponding to the sensing data that is of the candidate UE #1 and whose exposure to outside is supported includes the sense area information #11, and the candidate UE #1 determines, based on the sense area information #11, the sensing data #111 or the sensing result #111 from the sensing data #11 whose exposure to outside is supported. In other words, the sensing data #111 or the sensing result #111 may be the same as or different from the sensing data #11 or the sensing result #11 in the foregoing step S901, which mainly depends on the sense area size #11 and/or direction #11 indicated by the sense area information #11 sent by the source UE.

S964. The source UE determines, based on the target sense area information, corresponding sense area information #22, for example, an area size #22 and/or direction #22, for requesting sensing data from the candidate UE #2.

For a manner of determining the corresponding sense area information #22 for requesting sensing data from the candidate UE #2, refer to step S585 in the foregoing method 500. Details are not described herein again.

S965. The source UE sends a sensing data request message #22 to the candidate UE #2.

Correspondingly, the candidate UE #1 receives the sensing data request message #22 from the source UE.

The sensing data request message #22 carries the corresponding sense area information #22 that is determined in step S964 for requesting sensing data from the candidate UE #2.

S966. The candidate UE #2 sends a sensing data response message #22 to the source UE.

Correspondingly, the source UE receives the sensing data response message #22 from the candidate UE #2.

The sensing data response message #22 includes sensing data #222 or a sensing result #222.

The sensing data #222 or the sensing result #222 is determined by the candidate UE #2 based on the sense area information #22 and local sensing data whose exposure to outside is supported. It may be understood that sense area information corresponding to the sensing data that is of the candidate UE #2 and whose exposure to outside is supported includes the sense area information #22, and the candidate UE #2 determines, based on the sense area information #22, the sensing data #222 or the sensing result #222 from the sensing data whose exposure to outside is supported. In other words, the sensing data #222 or the sensing result #222 may be the same as or different from the sensing data #22 or the sensing result #22 in the foregoing step S902, which mainly depends on the sense area size #22 and/or direction #22 indicated by the sense area information #22 sent by the source UE.

S970. The source UE sends a cooperative sensing response message #11 to the application layer.

Correspondingly, the application layer receives the cooperative sensing response message #11 from the source UE.

For a specific implementation, refer to step S770 in the foregoing method 700. For brevity, details are not described herein again.

According to the technical solution of this application, the candidate UE may broadcast to outside that the candidate UE is allowed to expose local sensing data and a sensing direction associated with the sensing data, and the source UE selects a final candidate UE based on a distance between the source UE and the candidate UE, and obtains, from the candidate UE based on a target sensing direction indicated in a sensing request from the application layer, sensing data in the target sensing direction, so that the application layer senses an environment or object around the source UE.

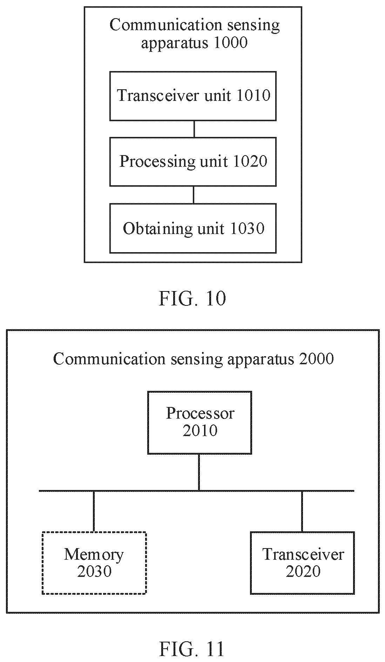

The foregoing describes in detail embodiments on a communication sensing method side of this application with reference to FIG. 1 to FIG. 9. The following describes in detail embodiments on an apparatus side of this application with reference to FIG. 10 and FIG. 11. It should be understood that descriptions of the apparatus embodiments correspond to the descriptions of the method embodiments. Therefore, for a part that is not described in detail, refer to the foregoing method embodiments.

FIG. 10 is a block diagram of a communication sensing apparatus 1000 according to an embodiment of this application. As shown in FIG. 10, the apparatus 1000 may include a transceiver unit 1010, a processing unit 1020, and an obtaining unit 1030. The transceiver unit 1010 may communicate with the outside, and the obtaining unit 1030 may also communicate with the outside. Unless otherwise specified, the transceiver unit 1010 and the obtaining unit 1030 may have a same function. The processing unit 1020 is configured to perform data processing. The transceiver unit 1010 may also be referred to as a communication interface or a transceiver unit.

In a possible design, the apparatus 1000 may implement steps or procedures performed by the first terminal device (for example, the source UE) in the foregoing method embodiments. The processing unit 1020 is configured to perform processing related operations of the first terminal device in the foregoing method embodiments. The transceiver unit 1010 is configured to perform receiving and sending related operations of the first terminal device in the foregoing method embodiments. The obtaining unit 1030 is configured to perform processing related operations of the first terminal device in the foregoing method embodiments.

In another possible design, the apparatus 1000 may implement steps or procedures corresponding to the second terminal device (for example, the candidate UE #1 or the candidate UE #2) in the foregoing method embodiments. The transceiver unit 1010 is configured to perform receiving and sending related operations of the second terminal device in the foregoing method embodiments. The processing unit 1020 is configured to perform processing related operations of the second terminal device in the foregoing method embodiments.

It should be understood that the apparatus 1000 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) for executing one or more software or firmware programs, a memory, an integrated logical circuit, and/or another suitable component that supports the described function. In an optional example, a person skilled in the art may understand that, the apparatus 1000 may be specifically the sensing transmitter in the foregoing embodiments, and may be configured to perform procedures and/or steps corresponding to the sensing transmitter in the foregoing method embodiments. Alternatively, the apparatus 1000 may be specifically the sensing receiver in the foregoing embodiments, and may be configured to perform procedures and/or steps corresponding to the sensing receiver in the foregoing method embodiments. To avoid repetition, details are not described herein again.

The apparatus 1000 in the foregoing solutions has a function of implementing corresponding steps performed by the sensing transmitter in the foregoing methods, or the apparatus 1000 in the foregoing solutions has a function of implementing corresponding steps performed by the sensing receiver in the foregoing methods. The function may be implemented by hardware, or may be implemented by executing corresponding software by hardware. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and related processing operations in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 10 may be the sensing receiver or the sensing transmitter in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 11 shows a communication sensing apparatus 2000 according to an embodiment of this application. As shown in FIG. 11, the apparatus 2000 includes a processor 2010 and a transceiver 2020. The processor 2010 and the transceiver 2020 communicate with each other by using an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 by using the internal connection path. The memory 2030 is configured to store instructions. The processor 2010 may execute the instructions stored in the memory 2030.

In a possible implementation, the apparatus 2000 is configured to implement procedures and steps corresponding to the first terminal device (for example, the source UE) in the foregoing method embodiments.

In another possible implementation, the apparatus 2000 is configured to implement procedures and steps corresponding to the second terminal device (for example, the candidate UE #1 or the candidate UE #2) in the foregoing method embodiments.

It should be understood that, the apparatus 2000 may be specifically the sensing transmitter or the sensing receiver in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the sensing transmitter or the sensing receiver in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform steps and/or procedures corresponding to the sensing transmitter or the sensing receiver in the foregoing method embodiments.

In an implementation process, steps in the foregoing methods may be implemented by using a hardware integrated logical circuit in the processor, or by using instructions in a form of software. Steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or a transistor logic device, or a discrete hardware component. The processor in embodiments of this application may implement or perform the methods, steps, and logical block diagrams disclosed in embodiments of this application. The general-purpose processor may be a microprocessor, or the processor may be any conventional processor or the like. Steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory in the systems and methods described in this specification aims to include but is not limited to these memories and any memory of another proper type.

According to the method provided in embodiments of this application, this application further provides a computer program product. The computer program product includes computer program code. When the computer program code is run on a computer, the computer is enabled to perform the method in the foregoing embodiments.

According to the method provided in embodiments of this application, this application further provides a computer-readable medium. The computer-readable medium stores program code. When the program code is run on a computer, the computer is enabled to perform the method in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located at one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the method described in embodiments of this application. The storage medium includes any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication sensing method, comprising:
sending, by a first terminal device, a sensing measurement request message to a second terminal device, wherein the sensing measurement request message is used to request the second terminal device to perform sensing measurement, and the sensing measurement request message comprises sense area information for performing sensing measurement by the second terminal device; and
obtaining, by the first terminal device, sensing data or a sensing result, wherein the sensing data or the sensing result is determined based on sensing measurement performed by the second terminal device.

2. The method according to claim 1, wherein the method further comprises:
obtaining, by the first terminal device, target sense area information; and
determining, by the first terminal device based on the target sense area information, the sense area information for performing sensing measurement by the second terminal device.

3. The method according to claim 2, wherein the determining, by the first terminal device based on the target sense area information, the sense area information for performing sensing measurement by the second terminal device comprises:
determining, by the first terminal device based on a distance between the first terminal device and the second terminal device and the target sense area information, the sense area information for performing sensing measurement by the second terminal device.

4. The method according to claim 2 or 3, wherein the obtaining, by the first terminal device, target sense area information comprises:
receiving, by the first terminal device, a cooperative sensing request message from an application device, wherein the cooperative sensing request message comprises indication information of the target sense area information; and
determining, by the first terminal device, the target sense area information based on the indication information of the target sense area information.

5. The method according to any one of claims 1 to 4, wherein before the sending, by a first terminal device, a sensing measurement request message to a second terminal device, the method further comprises:
sending, by the first terminal device, a discovery request message, wherein the discovery request message is used to request to discover the second terminal device, the discovery request message comprises a discovery purpose, and the discovery purpose indicates the second terminal device to support cooperative sensing; and
receiving, by the first terminal device, a discovery response message from the second terminal device.

6. The method according to claim 5, wherein the discovery request message further comprises at least one or more items:
location information of the first terminal device, or distance requirement information or direction requirement information between the first terminal device and the second terminal device.

7. The method according to claim 5 or 6, wherein the discovery response message comprises location information of the second terminal device.

8. The method according to any one of claims 1 to 4, wherein before the sending, by a first terminal device, a sensing measurement request message to a second terminal device, the method further comprises:
receiving, by the first terminal device, a first broadcast message from the second terminal device, wherein the first broadcast message comprises a sensing capability of the second terminal device and first indication information, and the first indication information indicates that the second terminal device supports cooperative sensing.

9. The method according to claim 8, wherein the first broadcast message further comprises location information of the second terminal device.

10. The method according to claim 7 or 9, wherein the method further comprises:
determining, by the first terminal device, the distance between the first terminal device and the second terminal device based on the location information of the second terminal device.

11. A communication sensing method, comprising:
receiving, by a second terminal device, a sensing measurement request message from a first terminal device, wherein the sensing measurement request message is used to request the second terminal device to perform sensing measurement, and the sensing measurement request message comprises sense area information for performing sensing measurement by the second terminal device; and
performing, by the second terminal device, sensing measurement based on the sensing measurement request message.

12. The method according to claim 11, wherein the method further comprises:
sending, by the second terminal device, sensing data or a sensing result to the first terminal device, wherein the sensing data or the sensing result is determined based on the sensing measurement performed by the second terminal device.

13. The method according to claim 11 or 12, wherein before the receiving, by a second terminal device, a sensing measurement request message from a first terminal device, the method further comprises:
receiving, by the second terminal device, a discovery request message from the first terminal device, wherein the discovery request message is used to request to discover the second terminal device, the discovery request message comprises a discovery purpose, and the discovery purpose indicates the second terminal device to support a cooperative sensing operation; and
sending, by the second terminal device, a discovery response message to the first terminal device.

14. The method according to claim 13, wherein the discovery request message further comprises at least one or more items:
location information of the first terminal device, or distance requirement information or direction requirement information between the first terminal device and the second terminal device.

15. The method according to claim 13 or 14, wherein the discovery response message comprises location information of the second terminal device.

16. The method according to claim 11 or 12, wherein before the receiving, by a second terminal device, a sensing measurement request message from a first terminal device, the method further comprises:
sending, by the second terminal device, a first broadcast message to the first terminal device, wherein the first broadcast message comprises a sensing capability of the second terminal device and first indication information, and the first indication information indicates that the second terminal device supports cooperative sensing.

17. The method according to claim 16, wherein the first broadcast message further comprises location information of the second terminal device.

18. A communication sensing method, comprising:
sending, by a first terminal device, a request message to a second terminal device, wherein the request message is used to request to obtain sensing data, and the request message comprises sense area information corresponding to the to-be-obtained sensing data; and
receiving, by the first terminal device, the sensing data from the second terminal device.

19. The method according to claim 18, wherein the method further comprises:
obtaining, by the first terminal device, target sense area information; and
determining, by the first terminal device based on the target sense area information, the sense area information sent to the second terminal device.

20. The method according to claim 19, wherein the determining, by the first terminal device based on the target sense area information, the sense area information sent to the second terminal device comprises:
determining, by the first terminal device based on a distance between the first terminal device and the second terminal device and the target sense area information, the sense area information sent to the second terminal device.

21. The method according to any one of claims 18 to 20, wherein the sense area information corresponding to the sensing data comprises a sense area size and/or direction.

22. The method according to any one of claims 19 to 21, wherein the obtaining, by the first terminal device, target sense area information comprises:
receiving, by the first terminal device, a cooperative sensing request message from an application device, wherein the cooperative sensing request message comprises indication information of the target sense area information; and
determining, by the first terminal device, the target sense area information based on the indication information of the target sense area information.

23. The method according to any one of claims 18 to 22, wherein the method further comprises:
receiving, by the first terminal device, a second broadcast message from the second terminal device, wherein the second broadcast message comprises second indication information, and the second indication information indicates that the second terminal device supports exposure of local sensing data to outside.

24. The method according to claim 23, wherein the second broadcast message further comprises location information of the second terminal device, and/or sense area information corresponding to the sensing data whose exposure to outside is supported.

25. The method according to any one of claims 18 to 24, wherein the method further comprises:
determining, by the first terminal device, the distance between the first terminal device and the second terminal device based on the location information of the second terminal device.

26. A communication sensing method, comprising:
receiving, by a second terminal device, a request message from a first terminal device, wherein the request message is used to request to obtain sensing data, and the request message comprises sense area information corresponding to the to-be-obtained sensing data; and
sending, by the second terminal device, the sensing data to the first terminal device.

27. The method according to claim 26, wherein the method further comprises:
performing, by the second terminal device, sensing measurement, and obtaining the sensing data and the sense area information corresponding to the sensing data; and
sending, by the second terminal device, a second broadcast message to the first terminal device, wherein the second broadcast message comprises second indication information and the sense area information corresponding to the sensing data, and the second indication information indicates that the second terminal device supports sending of the sensing data to the first terminal device.

28. The method according to claim 27, wherein the second broadcast message further comprises location information of the second terminal device, and/or sense area information corresponding to sensing data whose exposure to outside is supported.

29. A communication sensing apparatus, comprising:
a transceiver unit, configured to send a sensing measurement request message to a second terminal device, wherein the sensing measurement request message is used to request the second terminal device to perform sensing measurement, and the sensing measurement request message comprises sense area information for performing sensing measurement by the second terminal device; and
an obtaining unit, configured to obtain sensing data or a sensing result, wherein the sensing data or the sensing result is determined based on sensing measurement performed by the second terminal device.

30. The apparatus according to claim 29, wherein the apparatus further comprises a processing unit, wherein
the obtaining unit is further configured to obtain target sense area information; and
the processing unit is configured to determine, based on the target sense area information, the sense area information for performing sensing measurement by the second terminal device.

31. The apparatus according to claim 30, wherein
the processing unit is configured to determine, based on a distance between a first terminal device and the second terminal device and the target sense area information, the sense area information for performing sensing measurement by the second terminal device.

32. The apparatus according to claim 30 or 31, wherein
the transceiver unit is further configured to receive a cooperative sensing request message from an application device, wherein the cooperative sensing request message comprises indication information of the target sense area information; and
the processing unit is further configured to determine the target sense area information based on the indication information of the target sense area information.

33. The apparatus according to any one of claims 29 to 32, wherein
the transceiver unit is further configured to send a discovery request message, wherein the discovery request message is used to request to discover the second terminal device, the discovery request message comprises a discovery purpose, and the discovery purpose indicates the second terminal device to support cooperative sensing; and
the transceiver unit is further configured to receive a discovery response message from the second terminal device.

34. The apparatus according to claim 33, wherein the discovery request message further comprises at least one or more items:
location information of the first terminal device, or distance requirement information or direction requirement information between the first terminal device and the second terminal device.

35. The apparatus according to any one of claims 29 to 32, wherein
the transceiver unit is further configured to receive a first broadcast message from the second terminal device, wherein the first broadcast message comprises a sensing capability of the second terminal device and first indication information, and the first indication information indicates that the second terminal device supports cooperative sensing.

36. A communication sensing apparatus, comprising:
a transceiver unit, configured to receive a sensing measurement request message from a first terminal device, wherein the sensing measurement request message is used to request a second terminal device to perform sensing measurement, the sensing measurement request message comprises sense area information for performing sensing measurement by the second terminal device, and the sense area information for performing sensing measurement by the second terminal device is determined by the first terminal device based on target sense area information; and
a processing unit, configured to perform sensing measurement based on the sensing measurement request message.

37. The apparatus according to claim 36, wherein
the transceiver unit is further configured to receive a discovery request message from the first terminal device, wherein the discovery request message is used to request to discover the second terminal device, the discovery request message comprises a discovery purpose, and the discovery purpose indicates the second terminal device to support a cooperative sensing operation; and
the transceiver unit is further configured to send a discovery response message to the first terminal device.

38. The apparatus according to claim 37, wherein the discovery request message further comprises at least one or more items:
location information of the first terminal device, or distance requirement information or direction requirement information between the first terminal device and the second terminal device.

39. The apparatus according to claim 36, wherein
the transceiver unit is further configured to send a first broadcast message to the first terminal device, wherein the first broadcast message comprises a sensing capability of the second terminal device and first indication information, and the first indication information indicates that the second terminal device supports cooperative sensing.

40. A communication sensing apparatus, comprising:
a transceiver unit, configured to send a request message to a second terminal device, wherein the request message is used to request to obtain sensing data, and the request message comprises sense area information corresponding to the to-be-obtained sensing data; and
the transceiver unit is further configured to receive the sensing data from the second terminal device.

41. The apparatus according to claim 40, wherein the apparatus further comprises an obtaining unit and a processing unit, wherein
the obtaining unit is configured to obtain target sense area information; and
the processing unit is configured to determine, based on the target sense area information, the sense area information sent to the second terminal device.

42. The apparatus according to claim 41, wherein
the processing unit is further configured to determine, based on a distance between a first terminal device and the second terminal device and the target sense area information, the sense area information sent to the second terminal device.

43. The apparatus according to any one of claims 40 to 42, wherein the sense area information corresponding to the sensing data comprises a sense area size and/or direction.

44. The apparatus according to any one of claims 41 to 43, wherein
the transceiver unit is further configured to receive a cooperative sensing request message from an application device, wherein the cooperative sensing request message comprises indication information of the target sense area information; and
the processing unit is further configured to determine the target sense area information based on the indication information of the target sense area information.

45. The apparatus according to any one of claims 40 to 44, wherein
the transceiver unit is further configured to receive a second broadcast message from the second terminal device, wherein the second broadcast message comprises second indication information, and the second indication information indicates that the second terminal device supports exposure of local sensing data to outside.

46. The apparatus according to claim 45, wherein the second broadcast message further comprises location information of the second terminal device, and/or sense area information corresponding to the sensing data whose exposure to outside is supported.

47. The apparatus according to any one of claims 40 to 46, wherein
the processing unit is further configured to determine the distance between the first terminal device and the second terminal device based on the location information of the second terminal device.

48. A communication sensing apparatus, comprising:
a transceiver unit, configured to receive a request message from a first terminal device, wherein the request message is used to request to obtain sensing data, and the request message comprises sense area information corresponding to the to-be-obtained sensing data; and
the transceiver unit is further configured to send the sensing data to the first terminal device.

49. The apparatus according to claim 48, wherein the apparatus further comprises a processing unit, wherein
the processing unit is configured to perform sensing measurement, and obtain the sensing data and the sense area information corresponding to the sensing data; and
the transceiver unit is further configured to send a second broadcast message to the first terminal device, wherein the second broadcast message comprises second indication information and the sense area information corresponding to the sensing data, and the second indication information indicates that a second terminal device supports sending of the sensing data to the first terminal device.

50. The apparatus according to claim 49, wherein the second broadcast message further comprises location information of the second terminal device, and/or sense area information corresponding to sensing data whose exposure to outside is supported.

51. A communication sensing apparatus, comprising a processor, wherein the processor is coupled to a memory; and the processor is configured to execute a computer program stored in the memory, to enable the apparatus to perform the method according to any one of claims 1 to 10, or enable the apparatus to perform the method according to any one of claims 11 to 17, or enable the apparatus to perform the method according to any one of claims 18 to 25, or enable the apparatus to perform the method according to any one of claims 26 to 28.

52. A chip, comprising:
a processor, configured to invoke a computer program from a memory and run the computer program, to enable a communication apparatus in which the chip is installed to perform the method according to any one of claims 1 to 10, or enable a communication apparatus in which the chip is installed to perform the method according to any one of claims 11 to 17, or enable a communication apparatus in which the chip is installed to perform the method according to any one of claims 18 to 25, or enable a communication apparatus in which the chip is installed to perform the method according to any one of claims 26 to 28.

53. A computer-readable storage medium, wherein the computer-readable storage medium stores a computer program, and when the computer program is run, the computer is enabled to perform the method according to any one of claims 1 to 17, or the computer is enabled to perform the method according to any one of claims 18 to 28.

54. A computer program product, wherein the computer program product comprises computer program code, and when the computer program code is run on a computer, the computer is enabled to implement the method according to any one of claims 1 to 17, or implement the method according to any one of claims 18 to 28.
